# EUROPEAN PATENT APPLICATION

(11) **EP 4 207 656 A1**
(43) Date of publication of application: **05.07.2023**
(21) Application number: 20957177.7
(22) Date of filing: 15.10.2020
(51) Int. Cl.: H04L 5/00, H04W 72/04

(54) **DOWNLINK POSITIONING METHOD AND COMMUNICATION APPARATUS**

(71) Applicant: Huawei Technologies Co., Ltd., Shenzhen, Guangdong 518129 (CN)
(72) Inventor: GAO, Xin, Shenzhen, Guangdong 518129 (CN); HUANG, Su, Shenzhen, Guangdong 518129 (CN); LIU, Mengting, Shenzhen, Guangdong 518129 (CN)
(74) Representative: Goddar, Heinz J.
(86) International application number: PCT/CN2020/121323
(87) International publication number: WO 2022/077399

(57) **Abstract**

This application discloses a downlink positioning method and a communication apparatus. The method includes: A first network device sends a first message and first indication information to a terminal, and receives a second message from the terminal, where the first message includes resource configuration information of an aperiodic PRS, and the resource configuration information is used to configure a resource of the aperiodic PRS; the first indication information indicates the terminal to receive the aperiodic PRS; and the second message includes a first measurement result obtained by the terminal by measuring the aperiodic PRS, and the first measurement result is used to determine a location of the terminal. Because the first network device may send the aperiodic PRS to the terminal, the terminal does not need to receive the PRS from the first network device based on a fixed period. In this way, resource overheads used for positioning can be reduced, and a positioning delay can also be shortened.

## Description

### TECHNICAL FIELD

This application relates to the field of positioning technologies, and in particular, to a downlink positioning method and a communication apparatus.

### BACKGROUND

In a conventional positioning architecture, for example, a long term evolution (long term evolution, LTE) positioning architecture and a new radio (new radio, NR) release (release, Rel) R-16 positioning architecture, only periodic sending of a positioning reference signal (positioning reference signal, PRS) is supported. In other words, a network device continuously sends the PRS based on a configured period. Data cannot be transmitted or received on a resource for sending the PRS. As a result, a data throughput decreases. A terminal needs to receive the PRS based on a corresponding period. If the period is long, a positioning delay is long. If the period is short, higher resource overheads are required for positioning.

### SUMMARY

This application provides a downlink positioning method and a communication apparatus, to support aperiodic PRS-based positioning, so that a positioning delay can be shortened and resource overheads used for positioning can be reduced.

According to a first aspect, a downlink positioning method is provided. The method may be performed by a first communication apparatus. The first communication apparatus may be a communication device or a communication apparatus that can support the communication device to implement functions required for the method, for example, a chip system. An example in which the communication device is a first network device is used below for description. The method includes:
The first network device sends a first message and first indication information to a terminal, and receives a second message from the terminal. The first message includes resource configuration information of an aperiodic PRS, and the resource configuration information is used to configure a resource of the aperiodic PRS. The first indication information indicates the terminal to receive the aperiodic PRS, the second message includes a first measurement result obtained by the terminal by measuring the aperiodic PRS, and the first measurement result is used to determine a location of the terminal. Because the first network device triggers the terminal to receive the aperiodic PRS, the terminal does not need to receive the PRS based on a fixed period. In this way, resource overheads used for positioning can be reduced, and a positioning delay can also be shortened.

In a possible implementation, the resource configuration information includes resource type information, and the resource type information indicates that a resource configured by using the resource configuration information is the resource of the aperiodic PRS. This solution may be compatible with an existing positioning architecture based on a periodic PRS, and the resource configuration information clearly indicates whether the PRS configured by the first network device is periodic or aperiodic.

In a possible implementation, the first indication information includes a system frame number and/or a slot index that indicate/indicates a resource location of the aperiodic PRS. In this solution, the resource location at which the terminal receives the aperiodic PRS is indicated by using the system frame number and/or the slot index, which is direct and simple.

In a possible implementation, the resource configuration information includes an offset value, and the offset value indicates an interval between a moment at which the aperiodic PRS is received and a moment at which the first indication information is received. Alternatively, in this solution, the moment at which the first indication information is received and the offset value may indirectly indicate a start moment at which the terminal receives the aperiodic PRS, which is more flexible.

In a possible implementation, the resource configuration information includes status identifiers separately corresponding to resources of one or more aperiodic PRSs. In this solution, the status identifiers may indicate the resources of the one or more aperiodic PRSs configured by the network device for the terminal. For example, one or more PRS resource sets may be predefined or configured, and each PRS resource set includes resources of one or more aperiodic PRSs. A resource corresponding to an aperiodic PRS to be measured by the terminal is indicated by using a status identifier corresponding to the aperiodic PRS resource to minimize signaling overheads.

In a possible implementation, the first indication information includes a status identifier corresponding to a PRS resource of a triggered aperiodic PRS. Same as above, in this solution, the aperiodic PRS measured by the terminal may be alternatively indicated by using the status identifier corresponding to the PRS resource of the aperiodic PRS to reduce the signaling overheads.

In a possible implementation, the method further includes: The first network device receives a third message from a location management function (location management function, LMF). The third message includes resource configuration information of an aperiodic PRS configured by at least one second network device, and the resource configuration information of the aperiodic PRS configured by the at least one second network device is used to determine the resource configuration information of the aperiodic PRS in the first message. This solution is applicable to a scenario in which a plurality of network devices exist. The LMF collects resource configuration information of aperiodic PRSs of the plurality of network devices, and sends the collected resource configuration information of the aperiodic PRSs to the first network device. The first network device jointly configures resources of measurable aperiodic PRSs for the terminal. For example, the resources of the measurable aperiodic PRSs include the resource used by the aperiodic PRS sent by the second network device. The first network device triggers the terminal to receive the aperiodic PRS from the second network device and perform measurement based on the aperiodic PRS from the second network device. This improves positioning accuracy or implements positioning based on a PRS of a non-serving network device.

In a possible implementation, the method further includes: The first network device receives resource configuration information of an aperiodic PRS sent by at least one second network device. This solution is also applicable to the scenario in which the plurality of network devices exist. The first network device may determine to cooperate with a neighboring-cell base station to position the terminal to improve positioning accuracy. In this case, the first network device may directly exchange information, for example, the resource configuration information of the aperiodic PRS configured by the at least one second network device, required for positioning with the at least one second network device. In this way, the first network device and the at least one second network device may implement aperiodic PRS-based positioning through interface signaling interaction between network devices. Compared with higher layer signaling, interface signaling can reduce a delay of signaling interaction, thereby reducing the positioning delay.

In a possible implementation, the first message further includes the resource configuration information of the aperiodic PRS configured by the at least one second network device. Because the first message may further include resource configuration information of aperiodic PRSs configured by one or more second network devices, the first network device and the plurality of second network devices may jointly implement positioning to improve positioning accuracy of the terminal.

In a possible implementation, the method further includes: The first network device separately sends a fourth message to the at least one second network device, where the fourth message indicates the corresponding second network device to send the aperiodic PRS. In this solution, if the first network device determines to jointly implement aperiodic PRS-based positioning of the terminal with the second network device, the first network device may additionally indicate the one or more second network devices to send the aperiodic PRS.

In a possible implementation, that the first network device sends first indication information to a terminal includes:

The first network device receives a fifth message from the LMF, where the fifth message is used to trigger the first network device to send the first indication information. In this solution, in an aperiodic PRS-based positioning scenario, the LMF may request the first network device to report a measurement result that is of the aperiodic PRS and that is obtained by the terminal. To be specific, the LMF triggers the first network device to send the first indication information to the terminal.

In a possible implementation, the fifth message includes time information, and the time information indicates a time domain resource location at which the terminal sends the first measurement result. In this solution, the fifth message may include the time information, indicating the time domain resource location at which the terminal sends the first measurement result. In other words, the positioning delay may be limited by using the time information carried in the fifth message, so that a positioning delay requirement can be better met.

In a possible implementation, the method further includes: The first network device receives a sixth message from the LMF, where the sixth message indicates the first network device to send the aperiodic PRS. In this solution, in the aperiodic PRS-based positioning scenario, the LMF may trigger the first network device to send the aperiodic PRS.

In a possible implementation, the sixth message includes sending the system frame number and the slot index that indicate the resource location of the aperiodic PRS. Similar to the first indication information, the sixth message indicates, by using the system frame number and/or the slot index, the resource location at which the first network device sends the aperiodic PRS, which is direct and simple.

In a possible implementation, the method further includes: The first network device receives a seventh message from the LMF, and sends the first message to the terminal based on the seventh message. The seventh message is used to request the location of the terminal from the first network device, the seventh message includes resource type information, and the resource type information indicates that the resource configured by using the resource configuration information is the resource of the aperiodic PRS. In this solution, the location management device may clearly notify the first network device whether the terminal supports the aperiodic PRS-based positioning. In this way, the first network device configures an adapted PRS resource for the terminal. For example, the terminal supports the aperiodic PRS-based positioning, and the first network device configures the aperiodic PRS resource for the terminal to minimize the resource overheads and the positioning delay of the terminal.

According to a second aspect, another downlink positioning method is provided. The method may be performed by a second communication apparatus. The second communication apparatus may be a communication device or a communication apparatus that can support the communication device to implement functions required for the method, for example, a chip system. An example in which the communication device is a location management device is used below for description. The method includes:

The location management device sends a first message and first indication information to a terminal, and receives a first measurement result. The first message includes configuration information of an aperiodic positioning reference signal PRS, and the resource configuration information is used to configure a resource of the aperiodic PRS. The first indication information indicates the terminal to receive the aperiodic PRS, and the first measurement result corresponds to the aperiodic PRS and is used to determine a location of the terminal.

In a possible implementation, the resource configuration information includes resource type information, and the resource type information indicates that a resource configured by using the resource configuration information is the resource of the aperiodic PRS.

In a possible implementation, the first indication information includes a system frame number and a slot index that indicate a resource location of the aperiodic PRS.

In a possible implementation, the resource configuration information includes an offset value, and the offset value indicates an interval between a moment at which the aperiodic PRS is received and a moment at which the first indication information is received.

In a possible implementation, the resource configuration information includes status identifiers separately corresponding to resources of one or more aperiodic PRSs.

In a possible implementation, the first indication information includes a status identifier corresponding to a PRS resource of a triggered aperiodic PRS.

In a possible implementation, the method further includes: The location management device separately sends a second message to at least one second network device, where the second message is used to request to obtain resource configuration information of an aperiodic PRS of the corresponding second network device.

In a possible implementation, the method further includes: The location management device sends a third message to the first network device, where the third message is used to trigger the first network device to send the aperiodic PRS.

In a possible implementation, the third message includes time information, and the time information indicates a time domain resource location at which the terminal sends the first measurement result.

In a possible implementation, the method further includes: The location management device separately sends a fourth message to the at least one second network device, where the fourth message indicates the corresponding second network device to send the aperiodic PRS.

In a possible implementation, the method further includes: The location management device receives a fifth message from the terminal, where the fifth message indicates that the terminal has a capability of supporting aperiodic PRS positioning.

For technical effects brought by the second aspect or the possible implementations of the second aspect, refer to the description of the technical effects of the first aspect or the possible implementations of the first aspect.

According to a third aspect, another downlink positioning method is provided. The method may be performed by a third communication apparatus. The third communication apparatus may be a communication device or a communication apparatus that can support the communication device to implement functions required for the method, for example, a chip system. An example in which the communication device is a terminal is used below for description. The method includes:

The terminal receives a first message and first indication information, and sends a second message to a location management device. The first message includes resource configuration information of an aperiodic positioning reference signal PRS sent by the first network device, and the resource configuration information is used to configure a resource of the aperiodic PRS. The first indication information indicates the terminal to receive the aperiodic PRS from the first network device, the second message includes a first measurement result obtained by the terminal by measuring the aperiodic PRS, and the first measurement result is used to determine a location of the terminal.

In a possible implementation, that the terminal receives a first message includes: The terminal receives the first message from the location management device.

In a possible implementation, that the terminal receives first indication information includes: The terminal receives the first indication information from the location management device or the first network device.

In a possible implementation, that the terminal receives a first message includes: The terminal receives the first message from the first network device.

In a possible implementation, that the terminal receives first indication information includes: The terminal receives the first indication information from the first network device.

In a possible implementation, the first message further includes resource configuration information of an aperiodic PRS of at least one second network device.

For technical effects brought by the third aspect or the possible implementations of the third aspect, refer to the description of the technical effects of the first aspect or the possible implementations of the first aspect.

According to a fourth aspect, a communication apparatus is provided. The communication apparatus may be a network-side communication device or a communication apparatus, for example, a chip or a chip system that can support the network-side communication device to implement a function required by a method. For example, the communication apparatus is the first network device described above. The communication apparatus has a function of implementing behavior in the method embodiment in the first aspect. The function may be implemented by hardware, or may be implemented by hardware executing corresponding software. The hardware or the software includes one or more modules corresponding to the foregoing function. In a possible implementation, the communication apparatus includes, for example, a processing module and a transceiver module that are coupled to each other. These modules may perform corresponding functions in the method example in the first aspect. For details, refer to detailed description in the method example.

For example, the processing module is configured to generate a first message. The first message includes resource configuration information of an aperiodic positioning reference signal PRS, and the resource configuration information is used to configure a resource of the aperiodic PRS. The transceiver module is configured to: send the first message and first indication information to a terminal, and receive a second message from the terminal. The first indication information indicates the terminal to receive the aperiodic PRS, the second message includes a first measurement result obtained by the terminal by measuring the aperiodic PRS, and the first measurement result is used to determine a location of the terminal.

In a possible implementation, the resource configuration information includes resource type information, and the resource type information indicates that a resource configured by using the resource configuration information is the resource of the aperiodic PRS.

In a possible implementation, the first indication information includes a system frame number and a slot index that indicate a resource location of the aperiodic PRS.

In a possible implementation, the resource configuration information includes an offset value, and the offset value indicates an interval between a moment at which the aperiodic PRS is received and a moment at which the first indication information is received.

In a possible implementation, the resource configuration information includes status identifiers separately corresponding to resources of one or more aperiodic PRSs.

In a possible implementation, the first indication information includes a status identifier corresponding to a PRS resource of a triggered aperiodic PRS.

In a possible implementation, the transceiver module is further configured to:
receive a third message from a location management device. The third message includes resource configuration information of an aperiodic PRS configured by at least one second network device, and the resource configuration information of the aperiodic PRS configured by the at least one second network device is used to determine the resource configuration information of the aperiodic PRS in the first message.

In a possible implementation, the transceiver module is further configured to receive resource configuration information of an aperiodic PRS separately sent by at least one second network device.

In a possible implementation, the first message further includes the resource configuration information of the aperiodic PRS configured by the at least one second network device.

In a possible implementation, the transceiver module is further configured to separately send a fourth message to the at least one second network device, where the fourth message indicates the corresponding second network device to send the aperiodic PRS.

In a possible implementation, the transceiver module is specifically configured to receive a fifth message from the location management device, where the fifth message is used to trigger the communication apparatus to send the first indication information.

In a possible implementation, the fifth message includes time information, and the time information indicates a time domain resource location at which the terminal sends the first measurement result.

In a possible implementation, the transceiver module is further configured to receive a sixth message from the location management device, where the sixth message indicates the communication apparatus to send the aperiodic PRS.

In a possible implementation, a seventh message includes the system frame number and the slot index that indicate the resource location of the aperiodic PRS.

In a possible implementation, the transceiver module is further configured to receive the seventh message from the location management device, where the seventh message is used to request the location of the terminal from the communication apparatus, the seventh message includes resource type information, and the resource type information indicates that the resource configured by using the resource configuration information is the resource of the aperiodic PRS; and
send, to the terminal, the first message determined by the processing module based on the seventh message.

According to a fifth aspect, a communication apparatus is provided. The communication apparatus may be a network-side communication device or a communication apparatus, for example, a chip or a chip system that can support the network-side communication device to implement a function required by a method. For example, the communication apparatus is the location management device described above. The communication apparatus has a function of implementing behavior in the method embodiment in the second aspect. The function may be implemented by hardware, or may be implemented by hardware executing corresponding software. The hardware or the software includes one or more modules corresponding to the foregoing function. In a possible implementation, the communication apparatus includes, for example, a processing module and a transceiver module that are coupled to each other. These modules may perform corresponding functions in the method example in the second aspect. For details, refer to detailed description in the method example.

For example, the processing module is configured to generate a first message. The first message includes configuration information of an aperiodic positioning reference signal PRS, and the resource configuration information is used to configure a resource of the aperiodic PRS. The transceiver module is configured to: send the first message and first indication information to a terminal, and receive a first measurement result. The first indication information indicates the terminal to receive the aperiodic PRS, and the first measurement result corresponds to the aperiodic PRS and is used to determine a location of the terminal.

In a possible implementation, the resource configuration information includes resource type information, and the resource type information indicates that a resource configured by using the resource configuration information is the resource of the aperiodic PRS.

In a possible implementation, the first indication information includes a system frame number and a slot index that indicate a resource location of the aperiodic PRS.

In a possible implementation, the resource configuration information includes an offset value, and the offset value indicates an interval between a moment at which the aperiodic PRS is received and a moment at which the first indication information is received.

In a possible implementation, the resource configuration information includes status identifiers separately corresponding to resources of one or more aperiodic PRSs.

In a possible implementation, the first indication information includes a status identifier corresponding to a PRS resource of a triggered aperiodic PRS.

In a possible implementation, the transceiver module is further configured to separately send a second message to at least one second network device, where the second message is used to request to obtain resource configuration information of an aperiodic PRS of the corresponding second network device.

In a possible implementation, the transceiver module is further configured to send a third message to the first network device, where the third message is used to trigger the first network device to send the aperiodic PRS.

In a possible implementation, the third message includes time information, and the time information indicates a time domain resource location at which the terminal sends the first measurement result.

In a possible implementation, the transceiver module is further configured to separately send a fourth message to the at least one second network device, where the fourth message indicates the corresponding second network device to send the aperiodic PRS.

In a possible implementation, the transceiver module is further configured to receive a fifth message from the terminal, where the fifth message indicates that the terminal has a capability of supporting aperiodic PRS positioning.

According to a sixth aspect, a communication apparatus is provided. The communication apparatus may be a network-side communication device or a communication apparatus, for example, a chip or a chip system that can support the network-side communication device to implement a function required by a method. For example, the communication apparatus is the terminal described above. The communication apparatus has a function of implementing behavior in the method embodiment in the third aspect. The function may be implemented by hardware, or may be implemented by hardware executing corresponding software. The hardware or the software includes one or more modules corresponding to the foregoing function. In a possible implementation, the communication apparatus includes, for example, a processing module and a transceiver module that are coupled to each other. These modules may perform corresponding functions in the method example in the third aspect. For details, refer to detailed description in the method example.

For example, the transceiver module is configured to receive a first message and first indication information. The first message includes resource configuration information of an aperiodic positioning reference signal PRS, the resource configuration information is used to configure a resource of the aperiodic PRS, and the first indication information indicates to receive the aperiodic PRS. The processing module is configured to generate a second message. The second message includes a first measurement result obtained by the communication apparatus by measuring the aperiodic PRS, and the first measurement result is used to determine a location of the communication apparatus. The transceiver module is further configured to send the second message to a location management device.

In a possible implementation, the transceiver module is specifically configured to receive the first message from the location management device.

In a possible implementation, the transceiver module is specifically configured to receive the first indication information from the location management device or a first network device.

In a possible implementation, the transceiver module is specifically configured to receive the first message from the first network device.

In a possible implementation, the transceiver module is specifically configured to receive the first indication information from the first network device.

In a possible implementation, the first message further includes resource configuration information of an aperiodic PRS of at least one second network device.

The processing module in the communication apparatus in any one of the fourth aspect to the sixth aspect may be a processor, and the transceiver module may be a transceiver.

According to a seventh aspect, an embodiment of this application provides a communication apparatus. The communication apparatus may be the communication apparatus in any one of the fourth aspect to the sixth aspect in the foregoing embodiments, or may be a chip or a chip system disposed in the communication apparatus in any one of the fourth aspect to the sixth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the terminal, the first network device, or the location management device in the foregoing method embodiments.

It should be understood that the communication interface may be a transceiver in the communication apparatus, for example, implemented by using an antenna, a feeder, and a codec in the communication apparatus. Alternatively, if the communication apparatus is a chip disposed in a network device or a terminal, the communication interface may be an input/output interface of the chip, for example, an input/output circuit or a pin, and is configured to input/output an instruction, data, or a signal. The transceiver is used by the communication apparatus to communicate with another device. For example, when the communication apparatus is the terminal, the another device is the first network device or the location management device. Alternatively, when the communication apparatus is the first network device, the another device is the terminal or the location management device. Alternatively, when the communication apparatus is the location management device, the another device is the terminal or the first network device.

According to an eighth aspect, an embodiment of this application provides a chip system. The chip system includes a processor, may further include a memory, and is configured to implement the method performed by the communication apparatus in any one of the fourth aspect to the sixth aspect. In a possible implementation, the chip system further includes the memory, configured to store program instructions and/or data. The chip system may include a chip, or may include a chip and another discrete component.

According to a ninth aspect, an embodiment of this application provides a communication system. The communication system includes one or more communication apparatuses in the fourth aspect, one or more communication apparatuses in the fifth aspect, and one or more communication apparatuses in the sixth aspect.

According to a tenth aspect, this application provides a computer-readable storage medium. The computer-readable storage medium stores a computer program. When the computer program is run, the method performed by the terminal, the first network device, or the location management device in the foregoing aspects is performed.

According to an eleventh aspect, a computer program product is provided. The computer program product includes computer program code, and when the computer program code is run, the method performed by the terminal, the first network device, or the location management device in the foregoing aspects is performed.

For beneficial effects of the fourth aspect to the eleventh aspect and the implementations thereof, refer to the description of beneficial effects of the first aspect to the third aspect or the first aspect to the third aspect and the implementations thereof.

In this embodiment of this application, when the terminal supports the aperiodic PRSbased positioning, the first network device may configure the resource of the aperiodic PRS for the terminal. Because the first network device may send the aperiodic PRS to the terminal, the terminal does not need to receive the PRS from the first network device based on the fixed period. In this way, the resource overheads used for positioning can be reduced, and the positioning delay can also be shortened.

### BRIEF DESCRIPTION OF DRAWINGS

FIG. 1 is a schematic diagram of receiving, by a terminal, a periodic PRS sent by a network device;
FIG. 2 is a schematic diagram of an applicable positioning architecture according to an embodiment of this application;
FIG. 3 is a schematic flowchart of a first downlink positioning method according to an embodiment of this application;
FIG. 4 is a schematic flowchart of a second downlink positioning method according to an embodiment of this application;
FIG. 5 is a schematic flowchart of a third downlink positioning method according to an embodiment of this application;
FIG. 6 is a schematic flowchart of a fourth downlink positioning method according to an embodiment of this application;
FIG. 7 is a schematic flowchart of a fifth downlink positioning method according to an embodiment of this application;
FIG. 8 is a schematic flowchart of a sixth downlink positioning method according to an embodiment of this application;
FIG. 9 is a schematic diagram of a structure of a communication apparatus according to an embodiment of this application;
FIG. 10 is a schematic diagram of a structure of a communication apparatus according to an embodiment of this application; and
FIG. 11 is a schematic diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

Before this application is described, some terms in embodiments of this application are first briefly explained and described, to help a person skilled in the art have a better understanding.
(1) A terminal (which may also be referred to as user equipment (user equipment, UE)) in embodiments of this application is a device having a wireless transceiver function. The terminal device may communicate with a core network by using a radio access network (radio access network, RAN), and exchange voice and/or data with the RAN. The terminal device may be deployed on land, including an indoor or outdoor device, a handheld device, or a vehicle-mounted device; or may be deployed on water (for example, on a ship); or may be deployed in the air (for example, on an airplane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal device may include, for example, user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine type communication (machine-to-machine /machine-type communications, M2M/MTC) terminal device, an Internet of things (internet of things, loT) terminal device, a subscriber unit (subscriber unit), a subscriber station (subscriber station), a mobile station (mobile station), a remote station (remote station), an access point (access point, AP), a remote terminal (remote terminal), a user station (customer premises equipment, CPE), a fixed wireless access (fixed wireless access, FWA) device, an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus. For example, it may be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of example and not limitation, in embodiments of this application, the terminal may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

However, if the various terminals described above are located on a vehicle (for example, placed in the vehicle or mounted in the vehicle), the terminals may be considered as vehicle-mounted terminal devices. For example, the vehicle-mounted terminal devices are also referred to as on-board units (on-board unit, OBU).

The terminal may establish a connection to a carrier network through an interface (for example, N1) provided by the carrier network, and use services such as a data service and/or a voice service provided by the carrier network. The terminal device may further access a DN through the carrier network, and use a carrier service deployed on the DN and/or a service provided by a third party. The third party may be a service provider other than the carrier network and the terminal device, and may provide other services such as data and/or voice for the terminal device. A specific representation form of the third party may be specifically determined based on an actual application scenario, and is not limited herein.

(2) A core network in embodiments of this application may include a network device that processes and forwards signaling and data of a user, for example, a core network device such as an AMF, a session management function (session management function, SMF), a user plane gateway, and a location management device. The user plane gateway may be a server that has functions such as mobility management, routing, and forwarding specific to user plane data. The user plane gateway, for example, a serving gateway (serving gateway, SGW), a packet data network gateway (packet data network gateway, PGW), or a user plane network element functional entity (user plane function, UPF), is generally located on a network side. The AMF and the SMF are equivalent to a mobility management entity (mobility management entity, MME) in an LTE system. The AMF is mainly responsible for admission, and the SMF is mainly responsible for session management. Certainly, the core network may also include other network elements, which are not listed one by one herein.

The location management device has a positioning function. The location management device in embodiments of this application may include a location management function (location management function, LMF) or a location management component (location management component, LMC), or may be a local location management function (local location management function, LLMF) located in a network device. This is not limited in embodiments of this application. For ease of description, the following embodiments are described by using an example in which the location management device is the LMF.

(3) A network device in embodiments of this application includes, for example, an access network (access network, AN) device. An NG-RAN in embodiments of this application may include one or more access network devices. An access network device in the NG-RAN may also be referred to as a base station, a RAN node, or a RAN device. A network device in a V2X technology is a road side unit (road side unit, RSU). The RSU may be a fixed infrastructure entity that supports a V2X application, and can exchange messages with another entity that supports the V2X application. The network device is an entity that is on a network side and that is configured to transmit and/or receive a signal, and may be configured to perform mutual conversion between a received over-the-air frame and an Internet protocol (internet protocol, IP) packet, and serve as a router between a terminal and a rest part of an access network. The rest part of the access network may include an IP network or the like. The network device may further coordinate attribute management of an air interface. For example, the network device may be an evolved NodeB (evolved NodeB, eNB or e-NodeB) in LTE. The eNB is an apparatus that is deployed in a radio access network and that meets a 4G standard and provides a wireless communication function for a terminal. The access network device may alternatively be a new radio controller (new radio controller, NR controller), a gNodeB (gNB) in a 5G system, a centralized unit (centralized unit), a new radio base station, a radio remote module, a micro base station (also referred to as a small cell), a relay (relay), a distributed unit (distributed unit), a macro base station in various forms, a transmission reception point (transmission reception point, TRP), a transmission measurement function (transmission measurement function, TMF), a transmission point (transmission point, TP), any other radio access device, or a base station in next generation communication. However, embodiments of this application are not limited thereto. The network device may also include a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), or a wireless fidelity (wireless fidelity, Wi-Fi) access point (access point, AP).

In some deployments, a base station (for example, a gNB) may include a centralized unit (centralized unit, CU) and a distributed unit (distributed unit, DU). To be specific, functions of a base station in an original LTE access network are divided, some functions of the base station are deployed in one CU, remaining functions are deployed in a DU, and a plurality of DUs share the CU. This reduces costs and facilitates network expansion. The CU and the DU may be divided based on a protocol stack. An RRC layer, an SDAP layer, and a PDCP layer are deployed on the CU, and remaining radio link control RLC layers, MAC layers, and PHY layers are deployed on the DU. The CU and the DU may be connected through an F1 interface. The CU indicates that the gNB is connected to the core network through an NG interface, and the CU indicates that the gNB is connected to another gNB through an Xn interface.

Further, the CU may be further divided into a CU-control plane (control plane, CP) and a CU-user plane (user plan, UP). The CU-CP is responsible for a control plane function, and mainly includes an RRC layer and a PDCP layer corresponding to the control plane, namely, a PDCP-C. The PDCP-C is mainly responsible for data encryption and decryption, integrity protection, data transmission, and the like on the control plane. The CU-UP is responsible for a user plane function, and mainly includes the SDAP layer and the PDCP layer corresponding to the user plane, namely, a PDCP-U. The SDAP layer is mainly responsible for processing data of the core network and mapping a flow to a bearer. The PDCP-U is mainly responsible for encryption and decryption, integrity protection, header compression, serial number maintenance, data transmission, and the like on a data plane. The CU-CP is connected to the CU-UP through an E1 interface. On behalf of the gNB, the CU-CP is connected to the core network through the NG interface, and is connected to the DU through an F1 interface-control plane, namely, F1-C. The CU-UP is connected to the DU through an F1 interface-user plane, namely, F1-U. Certainly, in another possible implementation, the PDCP-C is implemented on the CU-UP.

(4) A downlink angle-of-departure (downlink angle of departure, DAOD/DL-AOD) is a direction of departure of an electromagnetic wave observed from a network device during downlink electromagnetic wave transmission between the network device and a terminal, and can be used to locate the terminal.

(5) An uplink angle-of-arrival (uplink angle of arrival, UAOA AJL-AOA), which can be used to locate a terminal. At least two network devices participating in terminal positioning measure an SRS sent by the terminal to obtain an AOA, and a location of the terminal may be located by using an intersection point of rays transmitted by each network device on a corresponding AOA.

(6) A time difference of arrival (time difference of arrival, TDOA) is a transmission time difference of signals sent by a terminal to two network devices, and can be used for terminal positioning. Based on different measured objects, the measured objects are (downlink time difference of arrival, DL-TDOA) and (uplink time difference of arrival, UL-TDOA). In some embodiments, the DL-TDOA may also be referred to as a UTDOA, and the UL-TDOA may also be referred to as an observed time difference of arrival (observed time difference of arrival, OTDOA).

(7) Terms "system" and "network" may be used interchangeably in embodiments of this application. The term "a plurality of" means two or more than two. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

"At least one of the following items (pieces)" or a similar expression thereof refers to any combination of these items, including a single item (piece) or any combination of a plurality of items (pieces). For example, at least one (piece) of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first message and a second message are merely intended to distinguish between different messages, but do not indicate that the two messages are different in priorities, a sending sequence, or importance.

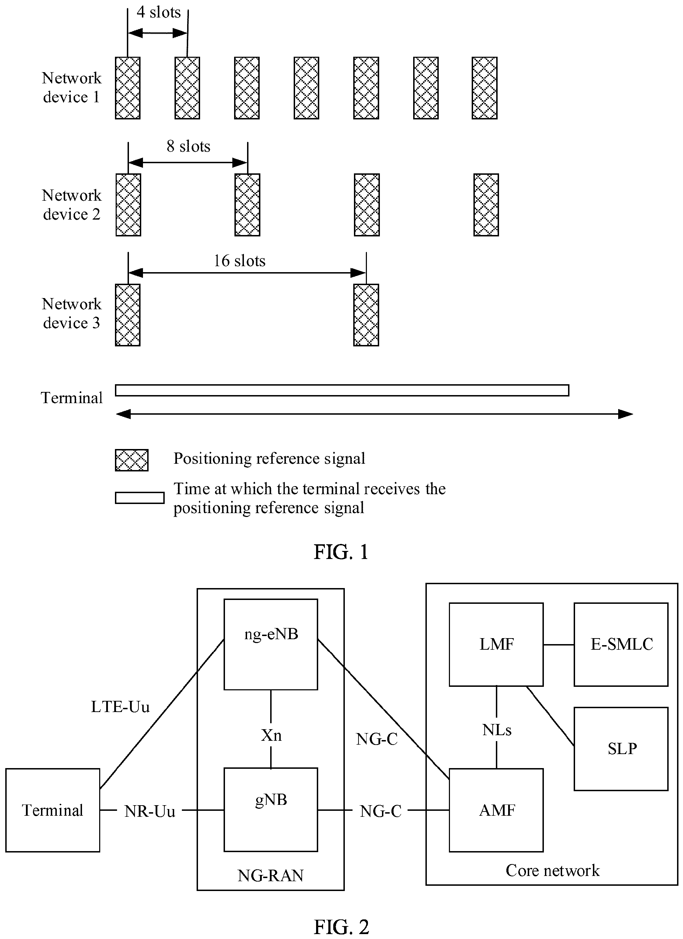

In an NR Rel-16 protocol version, only periodic PRS sending is supported, that is, once a positioning function is enabled, a network device continuously sends a PRS based on a configured period. Data cannot be transmitted or received on a resource for sending the PRS. As a result, a data throughput decreases. For a terminal, the terminal may need to receive PRSs from a plurality of network devices, resource overheads are excessively high, and even data receiving is interrupted. As shown in FIG. 1, FIG. 2 uses an example in which a network device 1, a network device 2, and a network device 3 are included. A period in which the network device 1 sends a PRS is 4 slots, a period in which the network device 2 sends a PRS is 8 slots, and a period in which the network device 3 sends a PRS is 16 slots. The terminal needs to receive the PRS based on a specific period. In this case, the terminal receives the PRSs of the network device 1 to the network device 3, resource overheads of the terminal need to cover at least 16 slots, and the resource overheads are high. In addition, the terminal receives the PRS based on the specific period. If the period is long, a positioning delay is long. If the period is short, higher resource overheads are required for positioning.

In view of this, the solution provided in this embodiment of this application supports aperiodic PRS-based positioning. Because the network device may send the aperiodic PRS to the terminal, the terminal does not need to receive the PRS based on a fixed period. In this way, the resource overheads used for positioning can be reduced, and the positioning delay can also be shortened.

The positioning method provided in embodiments of this application may be applied to various communication systems, for example, a long term evolution (long term evolution, LTE) system, a 5th generation (5th generation, 5G) system, such as NR, and a next generation communication system, such as a 6G system. Certainly, the technical solutions in embodiments of this application may also be applied to another communication system, provided that the communication system has a positioning requirement for a terminal. In addition, the communication system may further be applicable to a future-oriented communication technology. The systems described in embodiments of this application are intended to describe the technical solutions in embodiments of this application more clearly, and constitute no limitation on the technical solutions provided in embodiments of this application. A person of ordinary skill in the art may learn that, with evolution of network architectures, the technical solutions provided in embodiments of this application are also applicable to a similar technical problem.

FIG. 2 shows a network architecture of a communication system to which an embodiment of this application is applicable. FIG. 2 is a schematic diagram of a positioning architecture in LTE and NR Rel-16. As shown in FIG. 2, involved network elements/modules mainly include three parts: a next generation radio access network (next generation radio access network, NG RAN), a terminal, and a core network.

The core network includes one or more of an LMF, an access and mobility management function (access and mobility management function, AMF), a service location protocol (service location protocol, SLP), and an evolved serving mobile location center (evolved serving mobile location centre, E-SMLC). A location server, namely, the location management function (location management function, LMF), is connected to the AMF, and the LMF is connected to the AMF through an NLs interface. The LMF is responsible for supporting different types of location services related to the terminal, including positioning the terminal and transferring assistance data to the terminal. The AMF may receive a location services request related to the terminal from a 5th generation core network location service (5th generation core network location service, 5GC LCS) entity, or the AMF may start some location services on behalf of a specific terminal, and forward the location service request to the LMF. The LMF obtains location information returned by the terminal, and returns the related location information to the 5GC LCS entity.

The NG RAN may include a next generation NodeB (next generation NodeB, gNB), a next generation evolved NodeB (next generation evolved NodeB, ng-eNB), and the like. The gNB and the ng-eNB are connected through an Xn interface, and the LMF and the ng-eNB/gNB are connected through an NG-C interface.

It should be understood that FIG. 2 is merely example description of the communication system to which embodiments of this application are applicable, and does not specifically limit types, quantities, connection modes, and the like of network elements included in the communication system to which this application is applicable. For example, the E-SMLC or the SLP is necessary. For example, the gNB or the ng-eNB is also referred to as a TRP in some embodiments, and the terminal is referred to as a SET in some embodiments.

The following describes in detail the positioning method provided in embodiments of this application with reference to the accompanying drawings.

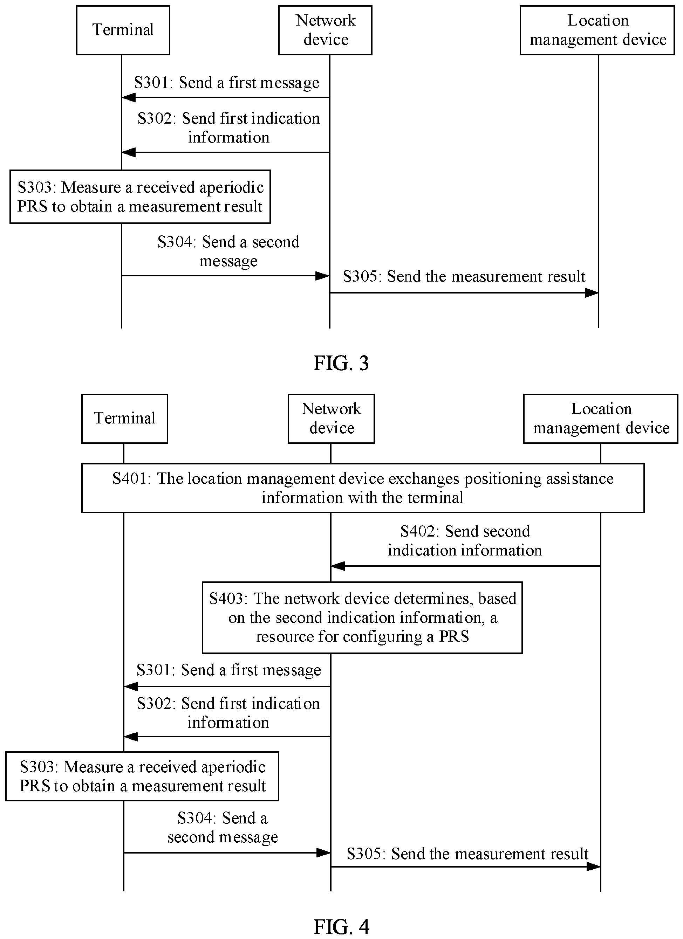

FIG. 3 is a flowchart of a downlink positioning method according to an embodiment of this application. In the following description, an example in which the method is applied to the communication system shown in FIG. 2 is used. In addition, the method may be performed by three communication apparatuses. The three communication apparatuses are, for example, a first communication apparatus, a second communication apparatus, and a third communication apparatus. For ease of description, in the following, an example in which the method is performed by a network device, a terminal, and a location management device is used, that is, an example in which the first communication apparatus is the network device, the second communication apparatus is the terminal, and the third communication apparatus is the location management device is used. It should be noted that the communication system in FIG. 2 is merely used as an example in this embodiment of this application. A scenario is not limited thereto. It should be understood that there is one network device (the network device may be referred to as a serving base station) currently accessed by the terminal. For ease of description, the network device is referred to as the serving base station below. In the following, an example in which the location management device is an LMF network element is used. It should be understood that in future communication such as 6G, the location management device may still be the LMF network element or have another name. This is not limited in this embodiment of this application. In the following description, a resource for sending an aperiodic PRS may also be referred to as an aperiodic PRS resource, and a corresponding resource location of the aperiodic PRS may also be referred to as an aperiodic PRS resource location.

Specifically, a specific procedure of the positioning method provided in this embodiment of this application is described as follows:
S301: The network device sends a first message to the terminal, and the terminal receives the first message, where the first message includes resource configuration information of the aperiodic PRS sent by the network device, and the resource configuration information is used to configure the aperiodic PRS resource.

The network device may notify the terminal of the aperiodic PRS resource configured by the network device, so that the terminal receives the aperiodic PRS on a proper resource. For example, the network device may send the first message to the terminal. The first message may include the resource configuration information of the aperiodic PRS sent by the network device, and the resource configuration information is used to configure the aperiodic PRS resource. A name of the first message is not limited in this embodiment of this application. For example, the first message may also be referred to as the configuration information of the aperiodic PRS. The first message may be carried in radio resource control (radio resource control, RRC) signaling or other possible signaling.

It should be understood that the network device may also configure a periodic PRS resource for the terminal. However, the terminal only knows that the PRS needs to be received, and does not know whether the PRS sent by the network device is periodic or aperiodic, that is, does not know whether the resource configured by the network device for the PRS is periodic or aperiodic. To distinguish whether the PRS sent by the network device is periodic or aperiodic, in this embodiment of this application, the resource configuration information may include resource type (resource type) information, and the resource type information may indicate that the resource configured by using the resource configuration information is the aperiodic PRS resource or the periodic PRS resource. To be specific, in this embodiment of this application, the resource configuration information may clearly indicate whether the PRS configured by the network device is periodic or aperiodic, to be compatible with an existing network architecture in which positioning is performed based on the periodic PRS.

In some embodiments, the network device may configure one or more aperiodic PRS resources, that is, the first message may include resource configuration information of the one or more aperiodic PRSs. Resource configuration information of different PRSs may be different, that is, configuration parameters of different PRSs may be different. If the first message includes the resource configuration information of the one or more aperiodic PRSs configured by one or more network devices, that is, the first message has a large amount of content, signaling overheads are high. Therefore, in this embodiment of this application, the first message may include status identifiers separately corresponding to the one or more aperiodic PRS resources, and resource configuration information of different aperiodic PRSs corresponds to different status identifiers.

For example, one or more PRS resource sets may be predefined or configured, and each PRS resource set includes one or more aperiodic PRS resources. In some embodiments, status identifiers corresponding to different PRS resource sets may be different, and status identifiers of PRSs in each PRS resource set may be the same. In some other embodiments, a PRS resource included in each PRS resource set separately corresponds to a status identifier, that is, the status identifier may also be considered as an identifier of the aperiodic PRS resource, or may be used to trigger an aperiodic PRS resource. In some embodiments, in addition to the resource type information, the resource configuration information may further include status identifiers corresponding to the one or more PRS resource sets. In this solution, the status identifier separately corresponding to the aperiodic PRS resource indicates the resource corresponding to the aperiodic PRS to be measured for the terminal. This can minimize the signaling overheads.

In some other embodiments, the resource configuration information may further include a system frame number and a slot index, that is, a frame in which the aperiodic PRS is located and slots that are in the frame and in which the aperiodic PRS is located.

S302: The network device sends first indication information to the terminal, and the terminal receives the first indication information, where the first indication information indicates the terminal to receive the aperiodic PRS from the network device.

After configuring the aperiodic PRS resource for the terminal, the network device may send the aperiodic PRS on the resource. Because the PRS sent by the network device is aperiodic and uncertain, the terminal cannot determine when to start to receive the aperiodic PRS, that is, the terminal does not know a resource location at which the aperiodic PRS is received, for example, a time domain resource location.

In an example, the network device may send the first indication information to the terminal to indicate the terminal to receive the aperiodic PRS from the network device. It should be noted that an implementation of the first indication information is not limited in this embodiment of this application. For example, the first indication information may be carried in DCI signaling.

In some embodiments, the first indication information may include the system frame number and the slot index, that is, a frame in which the resource of the aperiodic PRS is located and slots that are in the frame and in which the resource of the aperiodic PRS is located. The terminal may start to receive the aperiodic PRS at the corresponding time domain resource location based on the first indication information. Certainly, in some other embodiments, the first indication information may alternatively include the system frame number or the slot index. For example, if the resource configuration information of the aperiodic PRS includes the frame in which the aperiodic PRS is located, the first indication information may include the slot index. For another example, if the resource configuration information of the aperiodic PRS includes the slot location in which the aperiodic PRS is located, the first indication information may include the system frame number.

In another example, if the one or more PRS resource sets are predefined or configured, for example, a quantity or size of the PRS resources in each PRS resource set is predefined, time domain resource locations of the PRS resources in each PRS resource set may be additionally configured. In this case, the first indication information may include a status identifier corresponding to a triggered aperiodic PRS. To be specific, the status identifiers corresponding to the aperiodic PRS indicate which aperiodic PRSs are received or measured by the terminal to reduce the signaling overheads

In an alternative implementation, the network device may further indicate the terminal to start to receive the aperiodic PRS in a period of time after receiving the first indication information. In this case, the network device may notify, by using the resource configuration information of the aperiodic PRS, the terminal of an interval between a receiving moment at which the aperiodic PRS is received and a moment at which the terminal receives the first indication information. For example, the resource configuration information of the aperiodic PRS may include an offset value, and the offset value may indicate the interval between the moment at which the terminal receives the aperiodic PRS and the moment at which the terminal receives the first indication information. Alternatively, the offset value may indicate an offset between the resource location at which the terminal receives the aperiodic PRS and a resource location at which the terminal receives the first indication information. Alternatively, the offset indicate an offset between a start resource location at which the terminal receives the aperiodic PRS and an end resource location at which the terminal receives the first indication information. Alternatively, the offset value may indicate a slot interval between a slot in which the terminal receives the aperiodic PRS and a slot in which the terminal receives the first indication information. The terminal receives the first indication information, and starts to receive the aperiodic PRS after an interval of the offset value.

S303: The terminal measures the received aperiodic PRS to obtain a measurement result.

It should be understood that the first indication information may further indicate the terminal to report the measurement result of the received aperiodic PRS. The terminal receives, at the corresponding resource location based on the first indication information, the aperiodic PRS from the network device, and measures the aperiodic PRS to obtain the measurement result. Then, the terminal sends the measurement result to the network device. It should be understood that the measurement result is used for positioning.

S304: The terminal sends a second message to the network device, and the network device receives the second message, where the second message includes the measurement result obtained by the terminal by measuring the aperiodic PRS.

In some embodiments, an information element (referred to as an information element for short below) carried in the measurement result may include one or more of an RSRP value, an RSTD value, and an angle of arrival. For example, the measurement result includes an RSRP value corresponding to each PRS transmit beam. In some other embodiments, the measurement result may also include another possible measurement value. This is not listed one by one herein. After obtaining the measurement result, the terminal may send the measurement result to the network device. In some embodiments, the terminal may send the measurement result to the network device by using RRC signaling.

In some embodiments, the second message may be an RRC message. In other words, the terminal sends the measurement result to the network device by using the RRC signaling.

S305: The network device sends the measurement result to the location management device.

After receiving the measurement result, the network device sends the measurement result to the LMF, so that the LMF calculates a location of the terminal based on the measurement result. For example, the network device may send, to the LMF, a message carrying the measurement result. For example, the message may be a new radio positioning protocol A (new radio positioning protocol annex, NRPPa) message. In other words, the network device sends the measurement result to the LMF by using NRPPa signaling. Because the NRPPa signaling does not limit duration of a reporting period, the measurement result exchanged between the terminal and the LMF is carried by the RRC signaling and the NRPPa signaling in sequence. In this way, a period of reporting the measurement result of the terminal can be shortened.

The LMF may calculate, based on the measurement result and other positioning information that may be required, the location of the terminal by using a positioning calculation method. For the positioning calculation method herein, refer to a principle of LMF positioning. Details are not described again. It should be understood that for the other positioning information required for the LMF positioning, that is, positioning information other than the measurement result, refer to the conventional technology. Details are not described herein again.

Before positioning a terminal, the LMF may collect the positioning information of the terminal. For example, FIG. 4 is a schematic flowchart of a positioning method according to an embodiment of this application. The method may further perform the following steps.

S401: An LMF exchanges positioning assistance information with a terminal.

Exchange of the positioning assistance information between the LMF and the terminal is similar to a process of exchanging information between the terminal and the LMF through LPP information in an OTDOA positioning process. In other words, the LMF obtains a positioning capability of the terminal. For example, the LMF requests the positioning capability from the terminal, the LMF requests the positioning capability of the terminal through an LPP request capability (request capability) process, and the terminal reports positioning capability information to the LMF through an LPP provide capability (provide capability). For example, the positioning capability information may include a positioning method supported by the terminal, a measurement capability corresponding to the positioning method supported by the terminal, and the like. In this embodiment of this application, the positioning capability information further includes a type of a PRS supported by the terminal, for example, the terminal supports a periodic PRS or an aperiodic PRS.

It should be understood that S401 may be performed before S301.

S402: The LMF sends second indication information to the network device to request a location of the terminal from the network device.

The second indication information may be carried in a message sent by the LMF to the network device. A specific name of the message is not limited in this embodiment of this application. For example, the message may also be referred to as a location information request message. It should be noted that the message may be a newly defined NRPPa message, or may be an existing NRPPa message. If the message is the existing NRPPa message, the second indication information may be a field newly added to the NRPPa message, or a field defined in the NRPPa message may be reused for the second indication information. The LMF may send the second indication information to a serving base station by using NRPPa signaling to minimize duration required for positioning the terminal, and shorten a period for reporting positioning information by the terminal. Certainly, the second indication information may be sent to the network device in another form other than being carried in the NRPPa signaling. A manner of sending the second indication information is not specifically limited in this embodiment of this application. For example, the second indication information may be carried in RRC signaling, or may be carried in LPP signaling.

Positioning information reported by the network device varies with information included in the second indication information. The following describes one or more types of information that may be included in the second indication information.
(1) The second indication information may include a TRP identifier list that is used to assist the network device in selecting a TRP used for positioning, to minimize a possibility of a positioning failure. The network device configures resource configuration of a PRS of the selected TRP. The positioning information reported by the terminal is specific to the TRP selected by the network device.
(2) The second indication information may include bandwidth resource information that is used to assist the network device in determining a resource for sending the PRS. For example, the network device previously configures the aperiodic PRS on a first bandwidth resource. However, in a scenario in which a higher positioning precision requirement is imposed, a location management device may provide a reference bandwidth resource for the network device, for example, a second bandwidth resource larger than the first bandwidth resource, to meet a requirement for higher positioning precision.
(3) The second indication information may include time information, where the time information indicates time at which the terminal is expected to report the positioning information, for example, a measurement result. The time information may be a frame number and/or a slot index.
(4) The second indication information may include resource type information that is of the PRS and that indicates a type of the PRS supported by the terminal, for example, the terminal supports the periodic PRS or the aperiodic PRS. If the terminal supports the periodic PRS, the network device needs to configure a resource of the periodic PRS. If the terminal supports the aperiodic PRS, the terminal may configure the aperiodic PRS.

It should be noted that S402 may be performed before S301, or may be performed after S301 or S302. This is not limited in this embodiment of this application.

S403: The network device determines, based on the second indication information, the resource for configuring the PRS.

If the second indication information indicates that the terminal supports the periodic PRS, the network device determines resource configuration information of the periodic PRS. If the second indication information indicates that the terminal supports the aperiodic PRS, the network device determines resource configuration information of the aperiodic PRS.

In this embodiment of this application, the first network device may send the aperiodic PRS to the terminal, the terminal does not need to receive the PRS from the first network device based on a fixed period. In this way, resource overheads used for positioning can be reduced, and a positioning delay can also be shortened. In addition, in this embodiment of this application, the network device triggers the terminal to receive the aperiodic PRS or report the measurement result to reduce a delay of higher layer signaling.

In some embodiments, to improve positioning precision of the terminal, PRSs of a plurality of neighboring-cell network devices may be measured, and measurement results are reported to the LMF. For ease of differentiation, a serving network device (base station) is referred to as the first network device below, and the neighboring-cell network device is referred to as the second network device below. It should be understood that the terminal may measure PRSs from one or more second network devices.

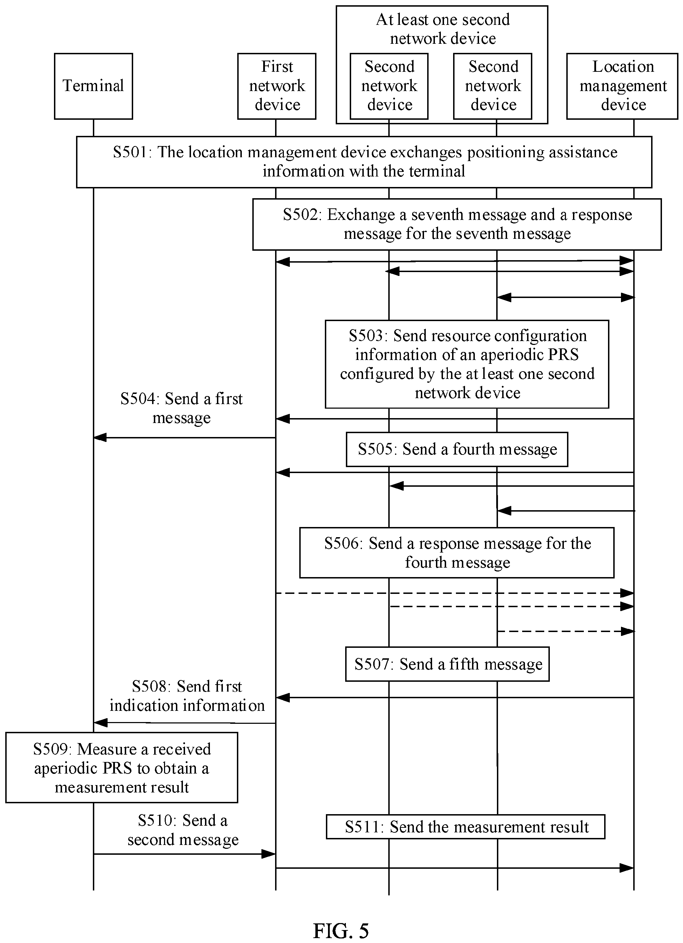

FIG. 5 is a schematic flowchart of a second downlink positioning method according to an embodiment of this application. A procedure of the method is described as follows:
S501: A location management device exchanges positioning assistance information with a terminal.

A specific implementation of S501 is the same as a specific implementation of S401. For details, refer to related description of S401. Details are not described herein again.

S502: The location management device sends a seventh message to a first network device and at least one second network device, and the first network device and the at least one second network device send a response message for the seventh message.

It should be understood that when needing to calculate a location of the terminal, the location management device may send the seventh message to the first network device and/or the at least one second network device. The seventh message may be used to request resource configuration information of an aperiodic PRS separately configured by the first network device and/or the at least one second network device. The seventh message may be an NRPPa message. It should be noted that the seventh message is merely an example of a name, and a specific name of the seventh message is not limited in this embodiment of this application. For example, the seventh message may be referred to as a positioning information request message. After receiving the seventh message, the first network device and the at least one second network device may configure corresponding PRS resources, and send resource configuration information of the configured PRS resources to the location management device. It should be understood that, if the terminal supports the aperiodic PRS, the resource configuration information sent by the first network device and the at least one second network device to the location management device may include the resource configuration information of the aperiodic PRS (which is used as an example below).

S503: The location management device sends, to the first network device, the resource configuration information of the aperiodic PRS configured by the at least one second network device.

After collecting the resource configuration information of the aperiodic PRS configured by the at least one second network device, the location management device may notify the first network device, for example, the location management device sends a third message to the first network device. The third message may carry the resource configuration information of the aperiodic PRS configured by the at least one second network device. In this way, the first network device may configure aperiodic PRS resources of all network devices for the terminal based on the resource configuration information reported by the location management device. In other words, in addition to the resource configuration information of the aperiodic PRS configured by the first network device, the first message further includes the resource configuration information of the aperiodic PRS configured by the at least one second network device.

S504: The first network device sends the first message to the terminal, and the terminal receives the first message.

It should be understood that a difference between S504 and S301 lies in that the first message in S504 further includes the resource configuration information of the aperiodic PRS configured by the at least one second network device. It should be noted that the first message sent by the first network device may include all or a part of configuration information in received resource configuration information of aperiodic PRSs of a plurality of second network devices. For example, the first message includes resource configuration information of an aperiodic PRS of a second network device with strong signal strength, or the first message includes resource configuration information of a part of aperiodic PRSs in resource configuration information of a plurality of aperiodic PRSs of the second network device with the strong signal strength, to save transmission resources.

S505: The location management device sends a fourth message to the first network device and the at least one second network device, where the fourth message indicates the corresponding network device to send the aperiodic PRS.

When the location management device has a requirement for terminal positioning, the first network device and the at least one second network device may be triggered to send the aperiodic PRS. The fourth message may be an NRPPa message. It should be noted that the fourth message is merely an example of a name, and a specific name of the fourth message is not limited in this embodiment of this application. For example, the fourth message may be referred to as an NRPPa transmission request message.

In some embodiments, the fourth message may carry time information that indicates a resource location at which the corresponding network device sends the aperiodic PRS. The fourth message may carry one piece of time information, or may carry a plurality of pieces of time information. This is not limited in this embodiment of this application.

S506: The first network device and the at least one second network device send a response message for the fourth message to the location management device.

The first network device or the at least one second network device receives the fourth message, and may send the response message for the fourth message to the location management device. The response message may be an NRPPa message, for example, may be referred to as an NRPPa transmission response message. The response message may carry time information, and the time information may indicate a time domain resource location at which the first network device or the at least one second network device sends the aperiodic PRS. For example, the response message may carry a system frame number and/or a slot index of the to-be-sent aperiodic PRS.

It should be noted that S506 is an optional step, that is, not mandatory. Therefore, S506 is illustrated by using dashed lines in FIG. 5. If the fourth message carries the plurality of pieces of time information, the response message for the fourth message may carry one piece of time information to explicitly notify the location management device of the resource location at which the network device sends the aperiodic PRS. If the fourth message carries the one piece of time information, the response message for the fourth message may not carry the time information.

S507: The location management device sends a fifth message to the first network device, where the fifth message is used to trigger the first network device to send first indication information.

The fifth message may be an NRPPa message. It should be noted that the fifth message is merely an example of a name, and a specific name of the fifth message is not limited in this embodiment of this application. For example, the fifth message may be referred to as a measurement result request message. In some embodiments, the fifth message may carry time information, and the time information is time information for sending the aperiodic PRS by the first network device. Certainly, the fifth message may not carry the time information.

S508: The first network device sends the first indication information to the terminal.

For a specific implementation of the first indication information, refer to the related description of S302. Details are not described herein again. A difference from S302 lies in that the first indication information further includes the time information for sending the aperiodic PRS by the at least one second network device. In addition to a status identifier corresponding to the aperiodic PRS resource configured by the first network device, the first indication information further includes a status identifier corresponding to an aperiodic PRS resource configured by the at least one second network device.

S509: The terminal measures the received aperiodic PRS to obtain a measurement result.

The terminal receives the first indication information, may receive the aperiodic PRSs from the first network device and the at least one second network device based on the time information carried in the first indication information, and measures the received aperiodic PRSs to obtain a plurality of measurement results.

S510: The terminal sends a second message to the first network device, and the first network device receives the second message, where the second message includes the measurement result obtained by the terminal by measuring the received aperiodic PRS.

For a specific implementation of the second message, refer to S304. A difference from S304 lies in that, in addition to the measurement result that is of the aperiodic PRS from the first network device and that is obtained by the terminal, the second message further includes the measurement result of the aperiodic PRS from the at least one second network device.

S511: The first network device sends the measurement result to the location management device.

For a specific implementation of S511, refer to 305. Details are not described herein again.

This embodiment of this application may be applied to a scenario in which a plurality of network devices exist. The LMF collects resource configuration information of an aperiodic PRS of a neighboring-cell network device, that is, the at least one second network device, and the LMF sends the collected aperiodic PRS to the first network device. The first network device configures the aperiodic PRSs of all the network devices for the terminal together, and triggers the terminal to receive the aperiodic PRSs from all the network devices. In other words, a problem of triggering an aperiodic PRS of a neighboring cell is resolved.

In FIG. 5, the location management device triggers the at least one second network device to send the aperiodic PRS. In an alternative implementation, the first network device may determine, by itself, to cooperate with the second network device to implement terminal positioning to improve positioning accuracy. In this case, the first network device may interact with the at least one second network device to obtain the resource configuration of the aperiodic PRS configured by the at least one second network device, and notify the terminal of the resource configuration of the aperiodic PRS.

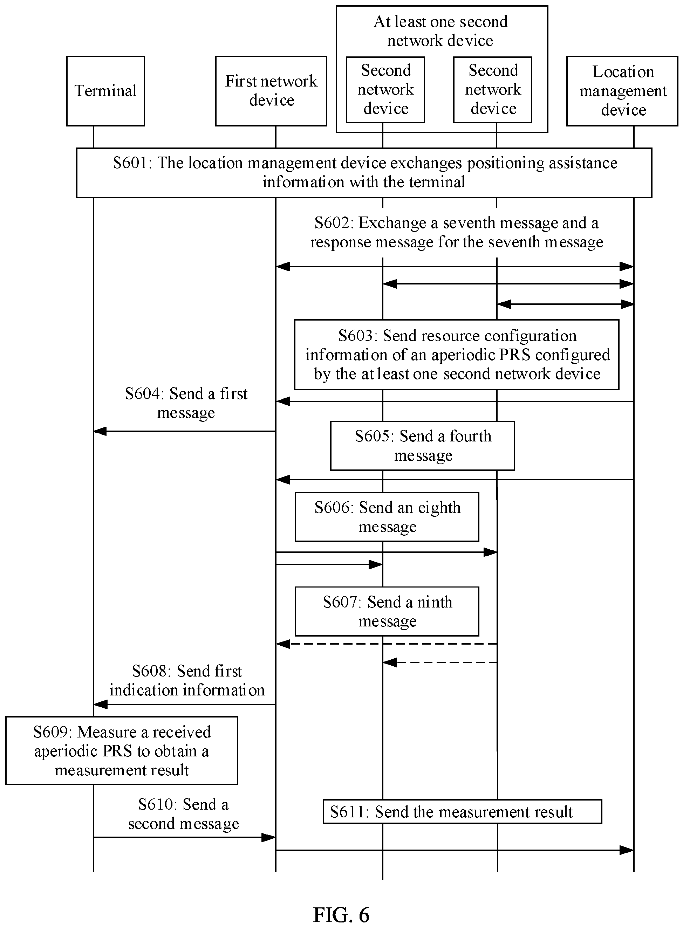

For example, FIG. 6 shows a third downlink positioning method according to an embodiment of this application. A procedure of the method is described as follows:
S601: A location management device exchanges positioning assistance information with a terminal.

A specific implementation of S601 is the same as a specific implementation of S401. For details, refer to related description of S401. Details are not described herein again.

S602: The location management device sends a seventh message to a first network device and at least one second network device, and the first network device and the at least one second network device send a response message for the seventh message.

S603: The location management device sends, to the first network device, resource configuration information of an aperiodic PRS configured by the at least one second network device.

S604: The first network device sends a first message to the terminal, and the terminal receives the first message.

A specific implementation of S602 is the same as the specific implementation of S502. For details, refer to related description of S502. A specific implementation of S603 is the same as the specific implementation of S503. For details, refer to related description of S503. A specific implementation of S604 is the same as the specific implementation of S504. For details, refer to related description of S504. Details are not described herein again.

S605: The location management device sends a fourth message to the first network device, where the fourth message is used to trigger the first network device to send first indication information.

A specific implementation of S605 is the same as a specific implementation of S507. For details, refer to related description of S507. Details are not described herein again.

A difference from S505 and S506 lies in that, in this embodiment of this application, after receiving the fourth message, the first network device may directly request the at least one second network device to send the aperiodic PRS, and receive a response message from the at least one second network device for the request. That is, the following steps S606 and S607 are performed.

S606: The first network device sends an eighth message to the at least one second network device, where the eighth message indicates the corresponding second network device to send the aperiodic PRS.

When receiving the fourth message, the first network device may request the at least one second network device to send the aperiodic PRS. The eighth message may be an Xn interface message. It should be noted that the eighth message is merely an example of a name, and a specific name of the eighth message is not limited in this embodiment of this application. For example, the eighth message may be referred to as an aperiodic PRS transmission request message.

S607: The at least one second network device separately sends a ninth message to the first network device.

The at least one second network device receives the eighth message, and may send the ninth message to the first network device. The ninth message may be considered as a response message for the eighth message, or may be an Xn interface message. The ninth message may carry time information, and the time information may indicate a time domain resource location at which the at least one second network device sends the aperiodic PRS. For example, the ninth message may carry a system frame number and/or a slot index of the to-be-sent aperiodic PRS.

It should be noted that S607 is optional, that is, is not a mandatory step. Therefore, S607 is illustrated by using dashed lines in FIG. 6.

S608: The first network device sends the first indication information to the terminal.

S609: The terminal measures the received aperiodic PRS to obtain a measurement result.

S610: The terminal sends a second message to the first network device, and the first network device receives the second message, where the second message includes the measurement result obtained by the terminal by measuring the received aperiodic PRS.

S611: The first network device sends the measurement result to the location management device.

Specific implementations of S608 to S611 are the same as specific implementations of S508 to S511. For details, refer to related description of S508 to S511. Details are not described herein again.

In this embodiment of this application, the LMF and the first network device may exchange signaling at a lower layer to implement aperiodic PRS-based positioning. Compared with higher layer signaling, interface signaling can reduce a delay of signaling interaction, thereby reducing the positioning delay.

In embodiments shown in FIG. 3 to FIG. 6, receiving of the aperiodic PRS by the terminal is triggered by the network device. In an alternative implementation, the receiving of the aperiodic PRS by the terminal may also be triggered by the location management device. The following provides description with reference to a specific example.

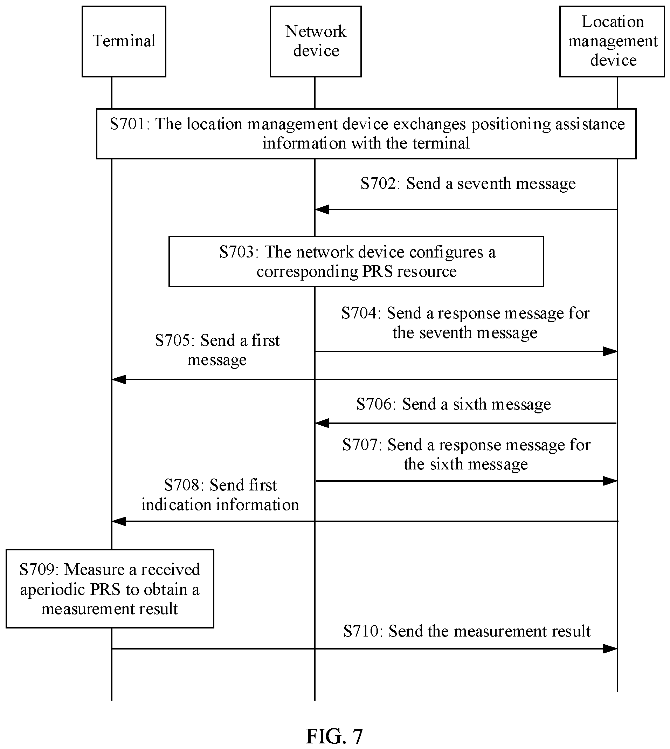

FIG. 7 is a schematic flowchart of a fifth downlink positioning method according to an embodiment of this application. The procedure is described as follows:
S701: A location management device exchanges positioning assistance information with a terminal.

A specific implementation of S701 is the same as a specific implementation of S401. For details, refer to related description of S401. Details are not described herein again.

S702: The location management device sends a seventh message to a network device, and the network device receives the seventh message.

It should be understood that when needing to calculate a location of the terminal, the location management device may send the seventh message to the network device. The seventh message may be used to request the network device to obtain resource configuration information of a PRS. The seventh message may be an NRPPa message. It should be noted that the seventh message is merely an example of a name, and a specific name of the seventh message is not limited in this embodiment of this application. For example, the seventh message may be referred to as a positioning information request message.

The seventh message may include resource type information that indicates the network device to configure a periodic PRS resource or an aperiodic PRS resource, or the seventh message may indicate the network device to configure a periodic PRS resource and an aperiodic PRS resource. The network device may determine, based on the resource type information carried in the seventh message, a resource for configuring the PRS.

S703: The network device configures a corresponding PRS resource

After receiving the seventh message, the first network device may configure the corresponding PRS resource. For example, if the resource type information in the seventh message indicates that the PRS is a periodic PRS, the network device may configure the periodic PRS resource. If the resource type information in the seventh message indicates that the PRS is an aperiodic PRS, the network device may configure the aperiodic PRS resource. If the resource type information in the seventh message indicates that the PRS may be a periodic PRS and an aperiodic PRS, the network device may configure the periodic PRS resource or the aperiodic PRS resource.

It should be noted that S703 may be performed before S702, or may be performed after S702. This is not limited in this embodiment of this application.

S704: The network device sends a response message for the seventh message to the location management device.

After configuring, for example, the aperiodic PRS resource, the network device may send the response message for the seventh message to the location management device. The response message may include resource configuration information of the aperiodic PRS.

S705: The location management device sends a first message to the terminal, and the terminal receives the first message.

Different from the foregoing embodiments in FIG. 3 to FIG. 6, in this embodiment of this application, the location management device sends the first message to the terminal. The first message may be an LPP message. In this way, an existing positioning procedure can be better compatible, and signaling overheads can be minimized.

S706: The location management device sends a sixth message to the network device, where the sixth message indicates the network device to send the aperiodic PRS.

S707: The location management device sends a response message for the sixth message to the network device, where the response message may carry information that indicates a resource location at which the network device sends the aperiodic PRS.

For specific implementations of S706 and S707, refer to related description of S505 and S506. Details are not described herein again.

S708: The location management device sends first indication information to the terminal.

Different from the foregoing embodiments in FIG. 3 to FIG. 6, in this embodiment of this application, the location management device sends the first indication information to the terminal, that is, the location management device triggers the terminal to receive the aperiodic PRS. In this embodiment, the first indication information may include time information, and the time information indicates a time domain resource location at which the terminal reports a measurement result. In other words, a positioning delay may be limited by using the time information carried in the first indication information, and a positioning delay requirement can be better met.

S709: The terminal measures the received aperiodic PRS to obtain the measurement result.

For a specific implementation of S709, refer to the related description of S509. Details are not described herein again.

S710: The terminal sends the measurement result to the location management device.

After obtaining the measurement result, the terminal may directly send the measurement result to the location management device.

In this embodiment of this application, the location management device may trigger the terminal to receive the aperiodic PRS, or the terminal may directly send the measurement result to the location management device without forwarding by the network device. This reduces the signaling overheads.

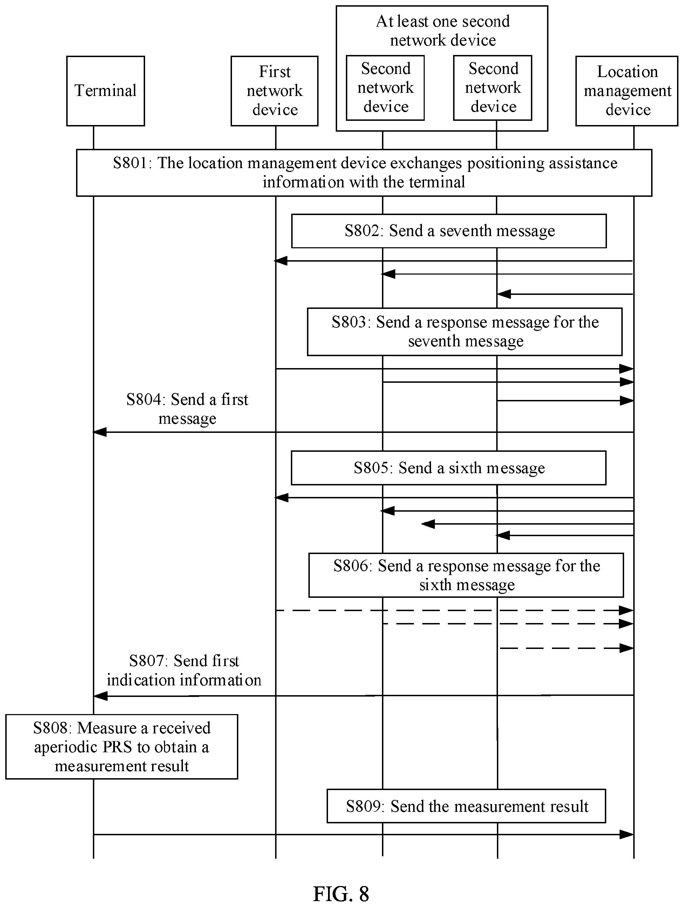

FIG. 8 is a schematic flowchart of a sixth downlink positioning method according to an embodiment of this application. The method is applicable to an application scenario in which a first network device and at least one second network device jointly locate a terminal. Similar to FIG. 7, a location management device may trigger the terminal to receive an aperiodic PRS, and the terminal may also directly send a measurement result to the location management device. A specific procedure of the method is described as follows:
S801: The location management device exchanges positioning assistance information with the terminal.

A specific implementation of S801 is the same as a specific implementation of S401. For details, refer to related description of S401. Details are not described herein again.

S802: The location management device separately sends a seventh message to the first network device and the at least one second network device.

It should be understood that, when needing to calculate a location of the terminal, the location management device may separately send the seventh message to the first network device and the at least one second network device. The seventh message may be used to request to obtain resource configuration information of a PRS from the corresponding network device. For a specific implementation of the seventh message, refer to the related description of S702. Details are not described herein again.

S803: The first network device and the at least one second network device separately send a response message for the seventh message to the location management device.

The first network device and the at least one second network device receive the seventh message, and may send the response message for the seventh message to the location management device. The response message may include resource configuration information of the aperiodic PRS.

S804: The location management device sends a first message to the terminal, and the terminal receives the first message.

After receiving the response messages, for the seventh message, sent by the first network device and the at least one second network device, the location management device may send the first message to the terminal. In other words, the resource configuration information of the aperiodic PRS separately configured by the first network device and the at least one second network device is sent to the terminal.

S805: The location management device separately sends a sixth message to the first network device and the at least one second network device, where the sixth message indicates the corresponding network device to send the aperiodic PRS.

S806: The first network device and the at least one second network device separately send a response message for the sixth message to the location management device, where the response message may carry time information that indicates a resource location at which the aperiodic PRS is sent.

For specific implementations of S805 and S806, refer to related description of S505 and S506. Details are not described herein again.

S807: The location management device sends first indication information to the terminal.

In this embodiment of this application, the location management device sends the first indication information to the terminal, that is, the location management device triggers the terminal to receive the aperiodic PRS.

S808: The terminal measures the received aperiodic PRS to obtain the measurement result.

For a specific implementation of S808, refer to the related description of S509. Details are not described herein again.

S809: The terminal sends the measurement result to the location management device.

After obtaining the measurement result, the terminal may directly send the measurement result to the location management device.

In this embodiment of this application, the location management device configures aperiodic PRS resources of all network devices for the terminal, and the location management device triggers the terminal to receive the aperiodic PRSs of all the network devices. This clarifies triggering of an aperiodic PRS of a neighboring cell, and reduces a delay of higher layer signaling, that is, a delay of terminal positioning is reduced.

In the foregoing embodiments provided in this application, the method provided in embodiments of this application is described from a perspective of interaction between the terminal, the network device, and the location management device. To implement functions in the foregoing methods provided in embodiments of this application, the terminal, the network device, and the location management device may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

With reference to the accompanying drawings, the following describes apparatuses configured to implement the foregoing methods in embodiments of this application. Therefore, all the foregoing content may be used in the following embodiments. Repeated content is not described again.

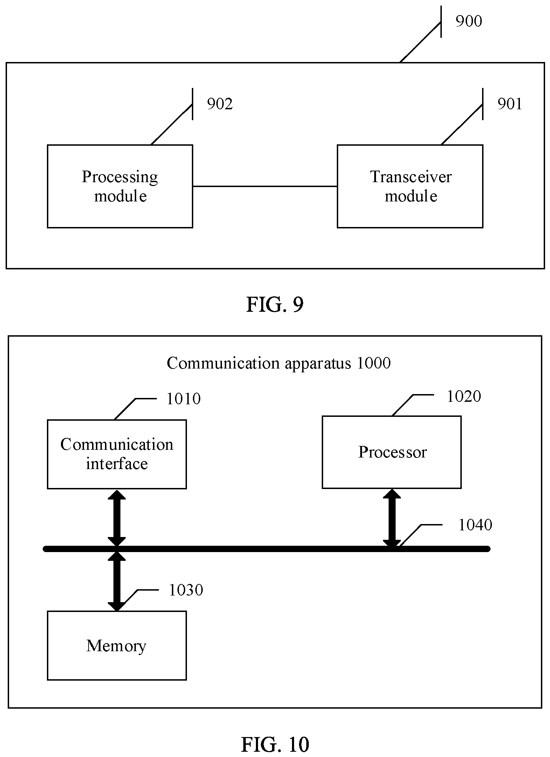

FIG. 9 is a possible example block diagram of a communication apparatus in this application. The communication apparatus 900 may correspondingly implement functions or steps implemented by the terminal, the network device, or the location management device in the foregoing method embodiments. The communication apparatus may include a transceiver module 901 and a processing module 902. Optionally, the apparatus may further include a storage module. The storage module may be configured to store instructions (code or a program) and/or data. The transceiver module 901 and the processing module 902 may be coupled to the storage module. For example, the processing module 902 may read the instructions (the code or the program) and/or the data in the storage module, to implement a corresponding method. The foregoing modules may be disposed independently, or may be partially or totally integrated.

The processing module 902 may be a processor or a controller, for example, may be a general-purpose central processing unit (central processing unit, CPU), a general-purpose processor, a digital signal processor (digital signal processor, DSP), an application-specific integrated circuit (application specific integrated circuits, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 901 is an interface circuit of the apparatus, and is configured to receive a signal from another apparatus. For example, when the apparatus is implemented in a form of a chip, the transceiver module 901 is an interface circuit used by the chip to receive a signal from another chip or apparatus, or is an interface circuit used by the chip to send a signal to another chip or apparatus.

The communication apparatus 900 may be the network device (or the first network device), the terminal, or the location management device in the foregoing embodiments, or may be a chip used for the network device (or the first network device), the terminal, or the location management device. For example, when the communication apparatus 900 is the network device (or the first network device), the terminal, or the location management device, the processing module 902 may be, for example, a processor, and the transceiver module 901 may be, for example, a transceiver. Optionally, the transceiver may include a radio frequency circuit, and the storage unit may be, for example, a memory. For example, when the communication apparatus 900 is a chip used for the network device (or the first network device), the terminal, or the location management device, the processing module 902 may be, for example, a processor, and the transceiver module 901 may be, for example, an input/output interface, a pin, or a circuit. The processing module 902 may execute computer-executable instructions stored in the storage unit. Optionally, the storage unit is a storage unit inside the chip, such as a register or a buffer. Alternatively, the storage unit may be a storage unit that is inside the network device, the terminal, or the location management device and that is located outside the chip, such as a read-only memory (read-only memory, ROM), another type of static storage device that can store static information and instructions, or a random access memory (random access memory, RAM).

In some possible implementations, the communication apparatus 900 can correspondingly implement behavior and functions of the network device (or the first network device) in the foregoing method embodiments. For example, the communication apparatus 900 may be the network device (or the first network device), or may be a component (for example, a chip or a circuit) applied to the network device (or the first network device). The transceiver module 901 may be configured to support communication between the network device and another network entity, for example, support communication between the network device (or the first network device) and the terminal and/or the location management device shown in FIG. 3 to FIG. 8. The processing module 902 is configured to control and manage an action of the network device (or the first network device). For example, the processing module 902 is configured to support the network device (or the first network device) to perform all operations of the network device in FIG. 3 to FIG. 8 other than receiving and sending.

For example, the transceiver module 901 may be configured to perform all receiving or sending operations performed by the network device in embodiments shown in FIG. 3 to FIG. 8. The processing module 902 is configured to perform all operations performed by the network device in embodiments shown in FIG. 3 to FIG. 8 other than receiving and sending operations.

For example, the transceiver module 901 may be configured to perform S301, S302, and S304 in the embodiment shown in FIG. 3, and/or another process configured to support the technology described in this specification. The processing module 902 is configured to perform all operations performed by the network device in the embodiment shown in FIG. 3 other than receiving and sending operations, and/or another process configured to support the technology described in this specification.

For another example, the transceiver module 901 may be configured to perform S402, S301, S302, and S304 in the embodiment shown in FIG. 4, and/or another process configured to support the technology described in this specification. The processing module 902 is configured to perform S403 in the embodiment shown in FIG. 4, and/or another process configured to support the technology described in this specification.

For still another example, the transceiver module 901 may be configured to perform S502 to S508, S510, and S511 in the embodiment shown in FIG. 5, and/or another process configured to support the technology described in this specification. The processing module 902 is configured to perform all operations performed by the first network device in the embodiment shown in FIG. 5 other than sending and receiving operations, and/or another process configured to support the technology described in this specification.

For still another example, the transceiver module 901 maybe configured to perform S602 to S608, S610, and S611 in the embodiment shown in FIG. 6, and/or another process configured to support the technology described in this specification. The processing module 902 is configured to perform all operations performed by the first network device in the embodiment shown in FIG. 6 other than sending and receiving operations, and/or another process configured to support the technology described in this specification.

For still another example, the transceiver module 901 may be configured to perform S702, S704, S706, and S707 in the embodiment shown in FIG. 7, and/or another process configured to support the technology described in this specification. The processing module 902 is configured to perform S703 in the embodiment shown in FIG. 7, and/or another process configured to support the technology described in this specification.

For still another example, the transceiver module 901 may be configured to perform S802, S803, S805, and S806 in the embodiment shown in FIG. 8, and/or another process configured to support the technology described in this specification. The processing module 902 is configured to perform all operations performed by the first network device in the embodiment shown in FIG. 8 other than sending and receiving operations, and/or another process configured to support the technology described in this specification.

In some embodiments, the processing module 902 is configured to generate a first message. The first message includes resource configuration information of an aperiodic positioning reference signal PRS, and the resource configuration information is used to configure a resource of the aperiodic PRS. The transceiver module 901 is configured to: send the first message and first indication information to a terminal, and receive a second message from the terminal. The first indication information indicates the terminal to receive the aperiodic PRS, the second message includes a first measurement result obtained by the terminal by measuring the aperiodic PRS, and the first measurement result is used to determine a location of the terminal.

In an optional implementation, the resource configuration information includes resource type information, and the resource type information indicates that a resource configured by using the resource configuration information is the resource of the aperiodic PRS.

In an optional implementation, the first indication information includes a system frame number and a slot index that indicate a resource location of the aperiodic PRS.

In an optional implementation, the resource configuration information includes an offset value, and the offset value indicates an interval between a moment at which the aperiodic PRS is received and a moment at which the first indication information is received.

In an optional implementation, the resource configuration information includes status identifiers separately corresponding to resources of one or more aperiodic PRSs.

In an optional implementation, the first indication information includes a status identifier corresponding to a PRS resource of a triggered aperiodic PRS.

In an optional implementation, the transceiver module 901 is further configured to:
receive a third message from a location management device. The third message includes resource configuration information of an aperiodic PRS configured by at least one second network device, and the resource configuration information of the aperiodic PRS configured by the at least one second network device is used to determine the resource configuration information of the aperiodic PRS in the first message.

In an optional implementation, the transceiver module 901 is further configured to:
receive resource configuration information of an aperiodic PRS separately sent by at least one second network device.

In an optional implementation, the first message further includes the resource configuration information of the aperiodic PRS configured by the at least one second network device.

In an optional implementation, the transceiver module 901 is further configured to separately send a fourth message to the at least one second network device, where the fourth message indicates the corresponding second network device to send the aperiodic PRS.

In an optional implementation, the transceiver module 901 is specifically configured to receive a fifth message from the location management device, where the fifth message is used to trigger the communication apparatus to send the first indication information.

In an optional implementation, the fifth message includes time information, and the time information indicates a time domain resource location at which the terminal sends the first measurement result.

In an optional implementation, the transceiver module 901 is further configured to receive a sixth message from the location management device, where the seventh message indicates the communication apparatus 900 to send the aperiodic PRS.

In an optional implementation, the sixth message includes the system frame number and the slot index that indicate the resource location of the aperiodic PRS.

In an optional implementation, the transceiver module 901 is further configured to receive a seventh message from the location management device, where the seventh message is used to request the location of the terminal from the communication apparatus 900, the seventh message includes the resource type information, and the resource type information indicates that the resource configured by using the resource configuration information is the resource of the aperiodic PRS; and
send, to the terminal, the first message determined by the processing module 902 based on the seventh message.

In some possible implementations, the communication apparatus 900 can correspondingly implement behavior and functions of the location management device in the method embodiments. For example, the communication apparatus 900 may be a location management function, or may be a component (for example, a chip or a circuit) applied to the location management device. The transceiver module 901 may be configured to support communication between the location management device and another network entity, for example, support communication between the location management device and the serving base stations shown in FIG. 3 to FIG. 8. The processing module 902 is configured to control and manage an action of the location management device. For example, the processing module 902 is configured to support the location management device to perform all operations in FIG. 3 to FIG. 8 other than sending and receiving.

For example, the transceiver module 901 may be configured to perform all receiving or sending operations performed by the location management device in embodiments shown in FIG. 3 to FIG. 8. The processing module 902 is configured to perform all operations performed by the location management device in embodiments shown in FIG. 3 to FIG. 8 other than receiving and sending operations.

For example, the transceiver module 901 may be configured to perform S305 in the embodiment shown in FIG. 3, and/or another process configured to support the technology described in this specification. The processing module 902 is configured to perform all operations performed by the location management device in the embodiment shown in FIG. 3 other than sending and receiving operations, and/or another process configured to support the technology described in this specification.

For another example, the transceiver module 901 may be configured to perform S402 and S305 in the embodiment shown in FIG. 4, and/or another process configured to support the technology described in this specification. The processing module 902 is configured to perform all operations performed by the location management device in the embodiment shown in FIG. 4 other than sending and receiving operations, and/or another process configured to support the technology described in this specification.

For still another example, the transceiver module 901 may be configured to perform S502 to S507 and S511 in the embodiment shown in FIG. 5, and/or another process configured to support the technology described in this specification. The processing module 902 is configured to perform all operations performed by the location management device in the embodiment shown in FIG. 5 other than sending and receiving operations, and/or another process configured to support the technology described in this specification.

For still another example, the transceiver module 901 may be configured to perform S602, S603, S605, S606, S607, and S611 in the embodiment shown in FIG. 6, and/or another process configured to support the technology described in this specification. The processing module 902 is configured to perform all operations performed by the location management device in the embodiment shown in FIG. 6 other than sending and receiving operations, and/or another process configured to support the technology described in this specification.

For still another example, the transceiver module 901 may be configured to perform S702, S704 to S707, and S710 in the embodiment shown in FIG. 7, and/or another process configured to support the technology described in this specification. The processing module 902 is configured to perform all operations performed by the location management device in the embodiment shown in FIG. 7 other than sending and receiving operations, and/or another process configured to support the technology described in this specification.

For still another example, the transceiver module 901 may be configured to perform S802 to S807 and S809 in the embodiment shown in FIG. 8, and/or another process configured to support the technology described in this specification. The processing module 902 is configured to perform all operations performed by the location management device in the embodiment shown in FIG. 8 other than sending and receiving operations, and/or another process configured to support the technology described in this specification.

In some embodiments, the processing module 902 is configured to generate a first message. The first message includes resource configuration information of an aperiodic positioning reference signal PRS, and the resource configuration information is used to configure a resource of the aperiodic PRS. The transceiver module 901 is configured to: send the first message and first indication information to a terminal, and receive a first measurement result. The first indication information indicates the terminal to receive the aperiodic PRS, and the first measurement result is used to determine a location of the terminal.

In an optional implementation, the resource configuration information includes resource type information, and the resource type information indicates that a resource configured by using the resource configuration information is the resource of the aperiodic PRS.

In an optional implementation, the first indication information includes a system frame number and a slot index that indicate a resource location of the aperiodic PRS.

In an optional implementation, the resource configuration information includes an offset value, and the offset value indicates an interval between a moment at which the aperiodic PRS is received and a moment at which the first indication information is received.

In an optional implementation, the resource configuration information includes status identifiers separately corresponding to resources of one or more aperiodic PRSs.

In an optional implementation, the first indication information includes a status identifier corresponding to a PRS resource of a triggered aperiodic PRS.

In an optional implementation, the transceiver module 901 is further configured to separately send a second message to at least one second network device, where the second message is used to request to obtain resource configuration information of an aperiodic PRS of the corresponding second network device.

In a possible implementation, the transceiver module 901 is further configured to send a third message to the first network device, where the third message is used to trigger the first network device to send the aperiodic PRS.

In a possible implementation, the third message includes time information, and the time information indicates a time domain resource location at which the terminal sends the first measurement result.

In a possible implementation, the transceiver module 901 is further configured to separately send a fourth message to the at least one second network device, where the fourth message indicates the corresponding second network device to send the aperiodic PRS.

In a possible implementation, the transceiver module 901 is further configured to receive a fifth message from the terminal, where the fifth message indicates that the terminal has a capability of supporting aperiodic PRS positioning.

In some possible implementations, the communication apparatus 900 can correspondingly implement behavior and functions of the terminal in the method embodiments. For example, the communication apparatus 900 may be the terminal, or may be a component (for example, a chip or a circuit) used in the terminal. The transceiver module 901 may be configured to support communication between the terminal and another network entity, for example, support communication between the terminal and the serving base stations shown in FIG. 3 to FIG. 8. The processing module 902 is configured to control and manage an action of the terminal. For example, the processing module 902 is configured to support the terminal to perform all operations in FIG. 3 to FIG. 8 other than sending and receiving.

For example, the transceiver module 901 may be configured to perform all receiving or sending operations performed by the terminal in embodiments shown in FIG. 3 to FIG. 8. The processing module 902 is configured to perform all operations performed by the terminal in embodiments shown in FIG. 3 to FIG. 8 other than receiving and sending operations.

For example, the transceiver module 901 may be configured to perform S301, S302, and S304 in the embodiment shown in FIG. 3, and/or another process configured to support the technology described in this specification. The processing module 902 is configured to perform S303 in the embodiment shown in FIG. 3, and/or another process configured to support the technology described in this specification.

For another example, the transceiver module 901 may be configured to perform S401, S301, S302, and S304 in the embodiment shown in FIG. 4, and/or another process configured to support the technology described in this specification. The processing module 902 is configured to perform S303 in the embodiment shown in FIG. 4, and/or another process configured to support the technology described in this specification.

For still another example, the transceiver module 901 may be configured to perform S501, S504, S508, and S510 in the embodiment shown in FIG. 5, and/or another process configured to support the technology described in this specification. The processing module 902 is configured to perform S509 in the embodiment shown in FIG. 5, and/or another process configured to support the technology described in this specification.

For still another example, the transceiver module 901 may be configured to perform S601, S604, S608, and S610 in the embodiment shown in FIG. 6, and/or another process configured to support the technology described in this specification. The processing module 902 is configured to perform S609 in the embodiment shown in FIG. 6, and/or another process configured to support the technology described in this specification.

For still another example, the transceiver module 901 may be configured to perform S701, S705, S708, and S710 in the embodiment shown in FIG. 7, and/or another process configured to support the technology described in this specification. The processing module 902 is configured to perform S709 in the embodiment shown in FIG. 7, and/or another process configured to support the technology described in this specification.

For still another example, the transceiver module 901 may be configured to perform S801, S804, S807, and S809 in the embodiment shown in FIG. 8, and/or another process configured to support the technology described in this specification. The processing module 902 is configured to perform S808 in the embodiment shown in FIG. 8, and/or another process configured to support the technology described in this specification.

In some embodiments, the transceiver module 901 is configured to receive a first message and first indication information. The first message includes resource configuration information of an aperiodic PRS, the resource configuration information is used to configure a resource of the aperiodic PRS, and the first indication information indicates the communication apparatus to receive the aperiodic PRS. The processing module 902 is configured to generate a second message. The second message includes a first measurement result obtained by the communication apparatus by measuring the aperiodic PRS, and the first measurement result is used to determine a location of the communication apparatus. The transceiver module 901 is further configured to send the second message to a location management device.

In an optional implementation, the transceiver module 901 is specifically configured to receive the first message from the location management device.

In an optional implementation, the transceiver module 901 is specifically configured to receive the first indication information from the location management device or a first network device.

In an optional implementation, the transceiver module 901 is specifically configured to receive the first message from the first network device.

In an optional implementation, the transceiver module 901 is specifically configured to receive the first indication information from the first network device.

In an optional implementation, the first message further includes resource configuration information of an aperiodic PRS of at least one second network device.

It should be understood that, in this embodiment of this application, the processing module 902 may be implemented by a processor or a processor-related circuit component, and the transceiver module 901 may be implemented by a transceiver or a transceiver-related circuit component.

FIG. 10 shows a communication apparatus 1000 according to an embodiment of this application. The communication apparatus 1000 may be a network device, and can implement functions of the network device (or the first network device) in the method provided in embodiments of this application. Alternatively, the communication apparatus 1000 may be a terminal, and can implement functions of the terminal in the method provided in embodiments of this application. Alternatively, the communication apparatus 1000 may be a location management device, and can implement functions of the location management device in the method provided in embodiments of this application. Alternatively, the communication apparatus 1000 may be an apparatus that can support the network device, the terminal, or the location management device to implement a corresponding function in the method provided in embodiments of this application. The communication apparatus 1000 may be a chip system. In this embodiment of this application, the chip system may include a chip, or may include a chip and another discrete component.

In a hardware implementation, the transceiver module 901 may be a transceiver, and the transceiver is integrated into the communication apparatus 1000 to form a communication interface 1010.

The communication apparatus 1000 includes at least one processor 1020. The processor 1020 may be a CPU, a microprocessor, an ASIC, or one or more integrated circuits configured to control program execution in the solutions of this application, configured to implement or support the communication apparatus 1000 to implement a function of the network device, the terminal, or the location management device in the method provided in embodiments of this application. For details, refer to detailed description in the method example. Details are not described herein again.

The communication apparatus 1000 may further include at least one memory 1030, configured to store program instructions and/or data. The memory 1030 is coupled to a processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions and/or the data stored in the memory 1030, so that the communication apparatus 1000 implements a corresponding method. At least one of the at least one memory may be included in the processor 1020.

The communication apparatus 1000 may further include a communication interface 1010. Any apparatus such as a transceiver is used, and is configured to communicate with another device or communication network, for example, a radio access network (radio access network, RAN), a wireless local area network (wireless local area networks, WLAN), or a wired access network. The communication interface 1010 is configured to communicate with another device by using a transmission medium, so that an apparatus in the communication apparatus 1000 can communicate with the another device. For example, when the communication apparatus 1000 is the network device, the another device is the terminal or the location management function. Alternatively, when the communication apparatus is the terminal, the another device is the network device. The processor 1020 may send and receive data through the communication interface 1010. The communication interface 1010 may be specifically a transceiver.

A specific connection medium between the communication interface 1010, the processor 1020, and the memory 1030 is not limited in this embodiment of this application. In this embodiment of this application, the memory 1030, the processor 1020, and the communication interface 1010 are connected to each other through a bus 1004 in FIG. 10. The bus is represented by using a thick line in FIG. 10. A connection manner between other components is merely an example for description, and is not limited thereto. The bus may be classified into an address bus, a data bus, a control bus, and the like. For ease of representation, only one thick line is for representing the bus in FIG. 10, but this does not mean that there is only one bus or only one type of bus.

In this embodiment of this application, the processor 1020 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed in embodiments of this application may be directly performed by a hardware processor, or may be performed by using a combination of hardware and software modules in the processor.

The memory 1030 may be a ROM, another type of static storage device that can store static information and instructions, a RAM, or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory 1030 is not limited thereto. The memory may exist independently, and is connected to the processor through the communication line 1004. Alternatively, the memory may be integrated with the processor.

The memory 1030 is configured to store computer-executable instructions for performing the solutions in this application, and the processor 1020 controls execution. The processor 1020 is configured to execute the computer-executable instruction stored in the memory 1030, to implement the downlink positioning method provided in the foregoing embodiments of this application.

Optionally, the computer-executable instructions in this embodiment of this application may also be referred to as application program code. This is not specifically limited in this embodiment of this application.

An embodiment of this application further provides a communication apparatus. The communication apparatus may be a terminal or a circuit. The communication apparatus may be configured to perform actions performed by the terminal in the foregoing method embodiments.

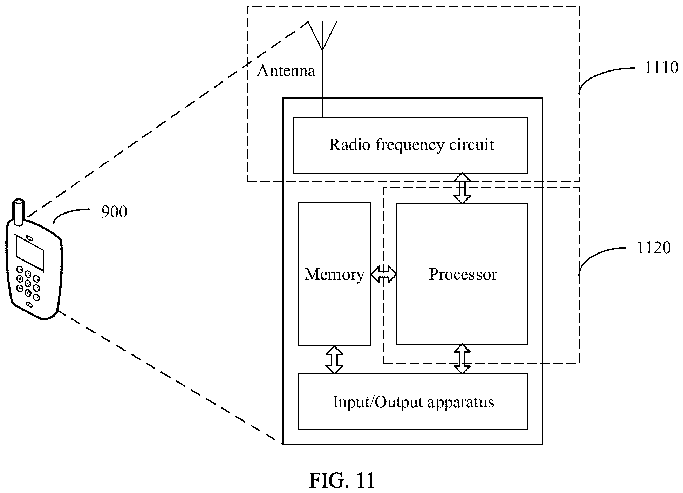

FIG. 11 is a simplified schematic diagram of a structure of a terminal. For ease of understanding and convenience of figure illustration, an example in which the terminal is a mobile phone is used in FIG. 11. As shown in FIG. 11, the terminal includes a processor, a memory, a radio frequency circuit, an antenna, and an input/output apparatus. The processor is mainly configured to process a communication protocol and communication data, control an on-board unit, execute a software program, and process data of the software program. The memory is mainly configured to store the software program and the data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display, a keyboard, or the like is mainly configured to: receive data input by a user, and output data to the user. It should be noted that some types of devices may have no input/output apparatus.

When needing to send data, after performing baseband processing on the to-be-sent data, the processor outputs a baseband signal to the radio frequency circuit. The radio frequency circuit performs radio frequency processing on the baseband signal, and then sends a radio frequency signal to outside in a form of an electromagnetic wave through the antenna. When data is sent to the device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 11 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have receiving and sending functions may be considered as a transceiver unit of the apparatus, and the processor having a processing function may be considered as a processing unit of the apparatus. As shown in FIG. 11, the apparatus includes a transceiver unit 1110 and a processing unit 1120. The transceiver unit 1110 may also be referred to as a transceiver, a transceiver machine, a transceiver apparatus, or the like. The processing unit 1120 may also be referred to as a processor, a processing board, a processing module, a processing apparatus, or the like. Optionally, a component that is in the transceiver unit 1110 and that is configured to implement a receiving function may be considered as a receiving unit, and a component that is in the transceiver unit 1110 and that is configured to implement a sending function may be considered as a sending unit. That is, the transceiver unit 1110 includes the receiving unit and the sending unit. The transceiver unit 1110 may also be sometimes referred to as a transceiver machine, a transceiver, a transceiver circuit, or the like. The receiving unit may also be sometimes referred to as a receiver machine, a receiver, a receiver circuit, or the like. The sending unit may also be sometimes referred to as a transmitter machine, a transmitter, a transmitter circuit, or the like.

It should be understood that the transceiver unit 1110 is configured to perform a sending operation and a receiving operation on a terminal side in the foregoing method embodiments, and the processing unit 1120 is configured to perform an operation other than the receiving/sending operation of the terminal in the foregoing method embodiments.

When the communication apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a network device, a terminal, and a location management device. For example, the communication system includes the network device, the terminal, and the location management device that are configured to implement any related function in FIG. 3 to FIG. 8. Optionally, the communication system may further include more terminals and/or network devices.

The network device is configured to implement functions of the network device part related to FIG. 3, FIG. 4, FIG. 5, FIG. 6, FIG. 7, or FIG. 8. The terminal is configured to implement functions of the terminal part related to FIG. 3, FIG. 4, FIG. 5, FIG. 6, FIG. 7, or FIG. 8. The location management device is configured to implement functions of the location management device part related to FIG. 3, FIG. 4, FIG. 5, FIG. 6, FIG. 7, or FIG. 8. For details, refer to the related description in the method embodiments. Details are not described herein again.

An embodiment of this application further provides a computer-readable storage medium, including instructions. When the instructions are run on a computer, the computer is enabled to perform the method performed by the network device, the terminal, or the location management device in FIG. 3, FIG. 4, FIG. 5, FIG. 6, FIG. 7, or FIG. 8.

An embodiment of this application further provides a computer program product, including instructions. When the instructions are run on a computer, the computer is enabled to perform the method performed by the network device, the terminal, or the location management device in FIG. 3, FIG. 4, FIG. 5, FIG. 6, FIG. 7, or FIG. 8.

An embodiment of this application provides a chip system. The chip system includes a processor, and may further include a memory, configured to implement functions of the network device, the terminal, and the location management device in the foregoing methods. The chip system may include a chip, or may include a chip and another discrete component.

An embodiment of this application further provides a computer-readable storage medium, including instructions. When the instructions are run on a computer, the computer is enabled to perform the method performed by the network device, the terminal, or the location management device in FIG. 3, FIG. 4, FIG. 5, FIG. 6, FIG. 7, or FIG. 8.

An embodiment of this application further provides a computer program product, including instructions. When the instructions are run on a computer, the computer is enabled to perform the method performed by the network device, the terminal, or the location management device in FIG. 3, FIG. 4, FIG. 5, FIG. 6, FIG. 7, or FIG. 8.

All or some of the methods in embodiments of this application may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A downlink positioning method, comprising:
sending, by a first network device, a first message to a terminal, wherein the first message comprises resource configuration information of an aperiodic positioning reference signal PRS, and the resource configuration information is used to configure a resource of the aperiodic PRS;
sending, by the first network device, first indication information to the terminal, wherein the first indication information indicates the aperiodic PRS received by the terminal; and
receiving, by the first network device, a second message from the terminal, wherein the second message comprises a first measurement result obtained by the terminal by measuring the aperiodic PRS, and the first measurement result is used to determine a location of the terminal.

2. The method according to claim 1, wherein the resource configuration information comprises resource type information, and the resource type information indicates that a resource configured by using the resource configuration information is the resource of the aperiodic PRS.

3. The method according to claim 1 or 2, wherein the first indication information comprises a system frame number and a slot index that indicate a resource location of the aperiodic PRS.

4. The method according to claim 1 or 2, wherein the resource configuration information comprises an offset value, and the offset value indicates an interval between a moment at which the aperiodic PRS is received and a moment at which the first indication information is received.

5. The method according to any one of claims 1 to 4, wherein the resource configuration information comprises status identifiers separately corresponding to resources of one or more aperiodic PRSs.

6. The method according to any one of claims 1 to 5, wherein the first indication information comprises a status identifier corresponding to a PRS resource of a triggered aperiodic PRS.

7. The method according to any one of claims 1 to 6, wherein the method further comprises:
receiving, by the first network device, a third message from a location management device, wherein the third message comprises resource configuration information of an aperiodic PRS configured by at least one second network device, and the resource configuration information of the aperiodic PRS configured by the at least one second network device is used to determine the resource configuration information of the aperiodic PRS in the first message.

8. The method according to any one of claims 1 to 6, wherein the method further comprises:
receiving, by the first network device, resource configuration information of an aperiodic PRS sent by at least one second network device.

9. The method according to claim 7 or 8, wherein the first message further comprises the resource configuration information of the aperiodic PRS configured by the at least one second network device.

10. The method according to claim 8 or 9, wherein the method further comprises:
sending, by the first network device, a fourth message to the at least one second network device, wherein the fourth message indicates the corresponding second network device to send the aperiodic PRS.

11. The method according to any one of claims 1 to 10, wherein the sending, by the first network device, first indication information to the terminal comprises:
receiving, by the first network device, a fifth message from the location management device, wherein the fifth message is used to trigger the first network device to send the first indication information.

12. The method according to claim 11, wherein the fifth message comprises time information, and the time information indicates a time domain resource location at which the terminal sends the first measurement result.

13. The method according to any one of claims 1 to 12, wherein the method further comprises:
receiving, by the first network device, a sixth message from the location management device, wherein the sixth message indicates the first network device to send the aperiodic PRS.

14. The method according to claim 13, wherein the sixth message comprises the system frame number and/or the slot index that indicate/indicates the resource location of the aperiodic PRS.

15. The method according to any one of claims 1 to 14, wherein the method further comprises:
receiving, by the first network device, a seventh message from the location management device, wherein the seventh message is used to request the location of the terminal from the first network device, the seventh message comprises resource type information, and the resource type information indicates that the resource configured by using the resource configuration information is the resource of the aperiodic PRS; and
sending, by the first network device, the first message to the terminal based on the seventh message.

16. A downlink positioning method, comprising:
sending, by a location management device, a first message to a terminal, wherein the first message comprises configuration information of an aperiodic positioning reference signal PRS, and the resource configuration information is used to configure a resource of the aperiodic PRS;
sending, by the location management device, first indication information to the terminal, wherein the first indication information indicates the terminal to receive the aperiodic PRS; and
receiving, by the location management device, a first measurement result corresponding to the aperiodic PRS, wherein the first measurement result is used to determine a location of the terminal.

17. The method according to claim 16, wherein the resource configuration information comprises resource type information, and the resource type information indicates that a resource configured by using the resource configuration information is the resource of the aperiodic PRS.

18. The method according to claim 16 or 17, wherein the first indication information comprises a system frame number and a slot index that indicate a resource location of the aperiodic PRS.

19. The method according to any one of claims 16 to 18, wherein the resource configuration information comprises an offset value, and the offset value indicates an interval between a moment at which the aperiodic PRS is received and a moment at which the first indication information is received.

20. The method according to any one of claims 16 to 19, wherein the resource configuration information comprises status identifiers separately corresponding to resources of one or more aperiodic PRSs.

21. The method according to any one of claims 16 to 20, wherein the first indication information comprises a status identifier corresponding to a PRS resource of a triggered aperiodic PRS.

22. The method according to any one of claims 16 to 21, wherein the method further comprises:
separately sending, by the location management device, a second message to at least one second network device, wherein the second message is used to request to obtain resource configuration information of an aperiodic PRS of the corresponding second network device.

23. The method according to any one of claims 16 to 22, wherein the method further comprises:
sending, by the location management device, a third message to a first network device, wherein the third message is used to trigger the first network device to send the aperiodic PRS.

24. The method according to claim 23, wherein the third message comprises time information, and the time information indicates a time domain resource location at which the terminal sends the first measurement result.

25. The method according to any one of claims 22 to 24, wherein the method further comprises:
separately sending, by the location management device, a fourth message to the at least one second network device, wherein the fourth message indicates the corresponding second network device to send the aperiodic PRS.

26. The method according to any one of claims 16 to 25, wherein the method further comprises:
receiving, by the location management device, a fifth message from the terminal, wherein the fifth message indicates that the terminal has a capability of supporting aperiodic PRS positioning.

27. A downlink positioning method, comprising:
receiving, by a terminal, a first message, wherein the first message comprises resource configuration information for sending an aperiodic positioning reference signal PRS by a first network device, and the resource configuration information is used to configure a resource of the aperiodic PRS;
receiving, by the terminal, first indication information, wherein the first indication information indicates the terminal to receive the aperiodic PRS from the first network device; and
sending, by the terminal, a second message to a location management device, wherein the second message comprises a first measurement result obtained by the terminal by measuring the aperiodic PRS, and the first measurement result is used to determine a location of the terminal.

28. The method according to claim 27, wherein the receiving, by a terminal, a first message comprises:
receiving, by the terminal, the first message from the location management device.

29. The method according to claim 28, wherein the receiving, by the terminal, first indication information comprises:
receiving, by the terminal, the first indication information from the location management device or the first network device.

30. The method according to claim 27, wherein the receiving, by a terminal, a first message comprises:
receiving, by the terminal, the first message from the first network device.

31. The method according to claim 30, wherein the receiving, by the terminal, first indication information comprises:
receiving, by the terminal, the first indication information from the first network device.

32. The method according to any one of claims 27 to 31, wherein the first message further comprises resource configuration information of an aperiodic PRS of at least one second network device.

33. A communication apparatus, comprising a transceiver module and a processing module, wherein
the processing module is configured to generate a first message, wherein the first message comprises resource configuration information of an aperiodic positioning reference signal PRS, and the resource configuration information is used to configure a resource of the aperiodic PRS; and
the transceiver module is configured to: send the first message and first indication information to a terminal, and receive a second message from the terminal, wherein the first indication information indicates the terminal to receive the aperiodic PRS, the second message comprises a first measurement result obtained by the terminal by measuring the aperiodic PRS, and the first measurement result is used to determine a location of the terminal.

34. The communication apparatus according to claim 33, wherein the resource configuration information comprises resource type information, and the resource type information indicates that a resource configured by using the resource configuration information is the resource of the aperiodic PRS.

35. The communication apparatus according to claim 33 or 34, wherein the first indication information comprises a system frame number and a slot index that indicate a resource location of the aperiodic PRS.

36. The communication apparatus according to claim 33 or 34, wherein the resource configuration information comprises an offset value, and the offset value indicates an interval between a moment at which the aperiodic PRS is received and a moment at which the first indication information is received.

37. The communication apparatus according to any one of claims 33 to 36, wherein the resource configuration information comprises status identifiers separately corresponding to resources of one or more aperiodic PRSs.

38. The communication apparatus according to any one of claims 33 to 37, wherein the first indication information comprises a status identifier corresponding to a PRS resource of a triggered aperiodic PRS.

39. The communication apparatus according to any one of claims 33 to 38, wherein the transceiver module is further configured to:
receive a third message from a location management device, wherein the third message comprises resource configuration information of an aperiodic PRS configured by at least one second network device, and the resource configuration information of the aperiodic PRS configured by the at least one second network device is used to determine the resource configuration information of the aperiodic PRS in the first message.

40. The communication apparatus according to any one of claims 33 to 38, wherein the transceiver module is further configured to:
receive resource configuration information of an aperiodic PRS separately sent by at least one second network device.

41. The communication apparatus according to claim 39 or 40, wherein the first message further comprises the resource configuration information of the aperiodic PRS configured by the at least one second network device.

42. The communication apparatus according to claim 40 or 41, wherein the transceiver module is further configured to:
separately send a fourth message to the at least one second network device, wherein the fourth message indicates the corresponding second network device to send the aperiodic PRS.

43. The communication apparatus according to any one of claims 33 to 42, wherein the transceiver module is further configured to:
receive a fifth message from the location management device, wherein the fifth message is used to trigger the communication apparatus to send the first indication information.

44. The communication apparatus according to claim 43, wherein the fifth message comprises time information, and the time information indicates a time domain resource location at which the terminal sends the first measurement result.

45. The communication apparatus according to any one of claims 33 to 44, wherein the transceiver module is further configured to:
receive a sixth message from the location management device, wherein the sixth message indicates the communication apparatus to send the aperiodic PRS.

46. The communication apparatus according to claim 45, wherein the sixth message comprises the system frame number and/or the slot index that indicate/indicates the resource location of the aperiodic PRS.

47. The communication apparatus according to any one of claims 33 to 46, wherein the transceiver module is further configured to:
receive a seventh message from the location management device, wherein the seventh message is used to request the location of the terminal from the communication apparatus, the seventh message comprises resource type information, and the resource type information indicates that the resource configured by using the resource configuration information is the resource of the aperiodic PRS; and
send, to the terminal, the first message determined by the processing module based on the seventh message.

48. A communication apparatus, comprising a transceiver module and a processing module, wherein
the processing module is configured to generate a first message, wherein the first message comprises configuration information of an aperiodic positioning reference signal PRS, and the resource configuration information is used to configure a resource of the aperiodic PRS; and
the transceiver module is configured to: send the first message and first indication information to a terminal, and receive a first measurement result, wherein the first indication information indicates the terminal to receive the aperiodic PRS, and the first measurement result corresponds to the aperiodic PRS and is used to determine a location of the terminal.

49. The communication apparatus according to claim 48, wherein the resource configuration information comprises resource type information, and the resource type information indicates that a resource configured by using the resource configuration information is the resource of the aperiodic PRS.

50. The communication apparatus according to claim 48 or 49, wherein the first indication information comprises a system frame number and a slot index that indicate a resource location of the aperiodic PRS.

51. The communication apparatus according to any one of claims 48 to 50, wherein the resource configuration information comprises an offset value, and the offset value indicates an interval between a moment at which the aperiodic PRS is received and a moment at which the first indication information is received.

52. The communication apparatus according to any one of claims 48 to 51, wherein the resource configuration information comprises status identifiers separately corresponding to resources of one or more aperiodic PRSs.

53. The communication apparatus according to any one of claims 48 to 52, wherein the first indication information comprises a status identifier corresponding to a PRS resource of a triggered aperiodic PRS.

54. The communication apparatus according to any one of claims 48 to 53, wherein the transceiver module is further configured to:
separately send a second message to at least one second network device, wherein the second message is used to request to obtain resource configuration information of an aperiodic PRS of the corresponding second network device.

55. The communication apparatus according to any one of claims 48 to 54, wherein the transceiver module is further configured to:
send a third message to the first network device, wherein the third message is used to trigger the first network device to send the aperiodic PRS.

56. The communication apparatus according to claim 55, wherein the third message comprises time information, and the time information indicates a time domain resource location at which the terminal sends the first measurement result.

57. The communication apparatus according to any one of claims 54 to 56, wherein the transceiver module is further configured to:
separately send a fourth message to the at least one second network device, wherein the fourth message indicates the corresponding second network device to send the aperiodic PRS.

58. The communication apparatus according to any one of claims 48 to 57, wherein the transceiver module is further configured to:
receive a fifth message from the terminal, wherein the fifth message indicates that the terminal has a capability of supporting aperiodic PRS positioning.

59. A communication apparatus, comprising a transceiver module and a processing module, wherein
the transceiver module is configured to receive a first message and first indication information, wherein the first message comprises resource configuration information of an aperiodic positioning reference signal PRS, the resource configuration information is used to configure a resource of the aperiodic PRS, and the first indication information indicates a terminal to receive the aperiodic PRS;
the processing module is configured to generate a second message, wherein the second message comprises a first measurement result obtained by the communication apparatus by measuring the aperiodic PRS, and the first measurement result is used to determine a location of the communication apparatus; and
the transceiver module is further configured to send the second message to the location management device.

60. The communication apparatus according to claim 59, wherein the transceiver module is specifically configured to:
receive the first message from the location management device.

61. The communication apparatus according to claim 60, wherein the transceiver module is specifically configured to:
receive the first indication information from the location management device or the first network device.

62. The communication apparatus according to claim 59, wherein the transceiver module is specifically configured to:
receive the first message from the first network device.

63. The communication apparatus according to claim 62, wherein the transceiver module is specifically configured to:
receive the first indication information from the first network device.

64. The communication apparatus according to any one of claims 59 to 63, wherein the first message further comprises resource configuration information of an aperiodic PRS of at least one second network device.

65. The communication apparatus according to any one of claims 33 to 47, 48 to 58, or 59 to 64, wherein the processing module is a processor, and/or the transceiver module is a transceiver.

66. The communication apparatus according to any one of claims 33 to 47, 48 to 58, or 59 to 64, wherein the communication apparatus is a chip or a chip system.

67. A communication apparatus, wherein the communication apparatus comprises a processor and a memory, the memory is configured to store a computer program, and the processor is configured to execute the computer program stored in the memory, to enable the apparatus to perform the method according to any one of claims 1 to 15, 16 to 26, or 27 to 32.

68. A communication apparatus, wherein the communication apparatus comprises a processor and a communication interface, the communication interface is configured to: input and/or output information, and the processor is configured to execute a computer program, to enable the apparatus to perform the method according to any one of claims 1 to 15, 16 to 26, or 27 to 32.

69. A computer-readable storage medium, wherein the computer-readable storage medium stores a computer program, and when the computer program is executed by a computer, the computer is enabled to perform the method according to any one of claims 1 to 15, 16 to 26, or 27 to 32.

70. A computer program product, wherein the computer program product stores a computer program, and when the computer program is executed by a computer, the computer is enabled to perform the method according to any one of claims 1 to 15, 16 to 26, or 27 to 32.
